(19) Europäisches Patentamt
European Patent Office
Office européen des brevets

(11) EP 2 215 156 B1

(12) # EUROPÄISCHE PATENTSCHRIFT

(45) Veröffentlichungstag und Bekanntmachung des Hinweises auf die Patenterteilung:
**09.01.2013 Patentblatt 2013/02**

(21) Anmeldenummer: **08854484.6**

(22) Anmeldetag: **24.11.2008**

(51) Int Cl.:
***C08K 5/00*** *(2006.01)* *C08K 5/101* *(2006.01)*
*C08K 5/315* *(2006.01)* *C08K 5/3492* *(2006.01)*
*C08K 5/3435* *(2006.01)*

(86) Internationale Anmeldenummer:
**PCT/EP2008/066050**

(87) Internationale Veröffentlichungsnummer:
**WO 2009/068492 (04.06.2009 Gazette 2009/23)**

(54) **FLÜSSIGE STABILISATORMISCHUNG**

LIQUID STABILIZER MIXTURE

MÉLANGE DE STABILISANTS LIQUIDE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.11.2007 EP 07121782**

(43) Veröffentlichungstag der Anmeldung:
**11.08.2010 Patentblatt 2010/32**

(73) Patentinhaber: **BASF SE**
**67056 Ludwigshafen (DE)**

(72) Erfinder:
- **SCHAMBONY, Simon**
  **67061 Ludwigshafen (DE)**
- **FINK, Jochen**
  **69226 Nussloch (DE)**
- **BRUCHMANN, Bernd**
  **67251 Freinsheim (DE)**

(56) Entgegenhaltungen:
**WO-A-02/092668** **WO-A-03/018682**
**WO-A-2004/094505** **WO-A-2006/013071**
**WO-A-2008/012252**

- **BASF: "Uvinul 3039" [Online] 1. Juli 1999 (1999-07-01), , GERMANY , XP002534905 Gefunden im Internet: URL:http://www.basf-japan.co.jp/apw/Japan/ Japan/ja_JP/function/conversions:/publish/ Japan/upload/pro/per/uvinul3039.pdf> [gefunden am 2009-06-29] Seite 4, Zeilen 1-10**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 215 156 B1

## Beschreibung

Die Erfindung betrifft Mischungen, die

(a) einen oder mehrere flüssige UV-Absorber, unter der Maßgabe, dass Tinuvin 384-2 als flüssiger UV-Absorber ausgeschlossen ist,
(b) ein oder mehrere verzweigte Polymere, enthaltend stabilisierend wirkende Gruppen,
(c) optional einen oder mehrere weitere Zusatzstoffe

enthalten. Weiterhin offenbart die vorliegende Erfindung Verfahren zur Stabilisierung von unbelebten organischen Materialien, insbesondere Kunststoffen, gegen die Einwirkung von Licht, Sauerstoff und/oder Wärme unter Verwendung dieser Mischung. Des Weiteren betrifft die Erfindung Gegenstände, die aus solchermaßen stabilisierten unbelebten organischen Materialien hergestellt werden.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils konkret angegebenen Kombination, sondern auch in anderen Kombinationen verwendbar sind, ohne den Rahmen der Erfindung zu verlassen. Bevorzugt, beziehungsweise ganz bevorzugt, sind insbesondere auch diejenigen Ausführungsformen der vorliegenden Erfindung, in denen alle Merkmale des erfindungsgemäßen Gegenstandes die bevorzugten, beziehungsweise ganz bevorzugten, Bedeutungen haben.

Unbelebte organische Materialien, insbesondere Kunststoffe, werden bekanntermaßen häufig schnell, vor allem durch Einwirkung von Licht, Sauerstoff und/oder Wärme zerstört. Diese Zerstörung zeigt sich üblicherweise in Vergilbung, Verfärbung, Rissbildung oder Versprödung des Materials. Mit Stabilisatoren, beispielsweise Lichtschutzmitteln, soll daher ein zufriedenstellender Schutz gegen die Zerstörung von unbelebtem organischem Material durch Licht, Sauerstoff und/oder Wärme erzielt werden.

Derivate des 2,2,6,6-Tetraalkylpiperidins sind unter der Bezeichnung HALS (Hindered Amine Light Stabilizers) schon seit ungefähr drei Jahrzehnten als Lichtschutzmittel und Stabilisatoren, insbesondere für Kunststoffe und Lacke, kommerziell im Einsatz.

Ebenso ist dem Fachmann bekannt, dass Mischungen aus mehreren Stabilisatoren, wie beispielsweise Antioxidantien, HALS-Verbindungen und/oder UV-Absorbern zur Stabilisierung von Polymeren eingesetzt werden können.

W003018682 offenbart die Anwendung von UV-Absorbern für den Schutz von Kunststoffen gegen Schädigung durch UV-Strahlung und geringe Migration des UV-Absorbers in Werkstoff.

Aus der EP 1 363 883 B1 sind Stabilisatoren die HALS-Verbindungen enthalten bekannt. Diese werden zur Stabilisierung von Polymeren eingesetzt. Weiterhin werden in dieser Schrift Zusammensetzungen beschrieben, die unter anderem auch UV-Absorber enthalten können.

EP 1 060 225 B1 beschreibt ein Verfahren zur Herstellung von flüssigen polyfunktionellen Additiven. Diese polyfunktionellen Additive werden zur Stabilisierung von organischem Material, beispielsweise Polymeren eingesetzt. Neben den polyfunktionellen Additiven können in den stabilisierten Materialien auch noch weitere Additive, wie zum Beispiel UV Absorber, enthalten sein.

Die WO 02/092668 A1 beschreibt Additive, die bekannte Polymeradditive als Gruppen enthalten, die chemisch an hyperverzweigte oder dendritische Polymere oder Copolymere gebunden sind. Diese Polymeradditive können beispielsweise UV-Absorber oder auch HALS-Verbindungen sein. Weiterhin sind aus dieser Schrift auch Zusammensetzungen bekannt, die diese Stabilisatoren enthalten. Weiterhin können in diesen Zusammensetzung auch andere konventionelle Additive, wie zum Beispiel UV-Absorber oder Lichtstabilisatoren enthalten sein.

Die WO 2004/094505 A1 offenbart Stabilisatoren, die aufgebaut sind aus hochverzweigten Polymeren mit funktionellen Gruppen als hochverzweigte Ankergruppe, einer oder mehreren stabilisierend wirkende Gruppen, welche Kunststoffe gegen Schädigungen durch Wärme, UV-Strahlung, Oxidation, Hydrolyse oder mechanische Einwirkung bei der Verarbeitung schützen, wobei die stabilisierend wirkenden Gruppen über funktionelle Gruppen, die mit den funktionellen Gruppen der hochverzweigten Polymere reagieren können, an die Ankergruppe angekoppelt sind.

Die WO 2005/070987 A1 offenbart Stabilisatoren, die aufgebaut sind aus einem oder mehreren Polyisocyanaten mit im Mittel 2 bis 10 Isocyanatgruppen pro Molekül, pro Mol Isocyanatgruppen 0,1 bis 1,0 Mol einer oder mehrerer stabilisierend wirkender Gruppen, welche Kunststoffe gegen Schädigung durch Wärme, UV-Strahlung, Oxidation, Hydrolyse oder mechanische Einwirkung bei der Verarbeitung schützen, wobei die stabilisierend wirkenden Gruppen über funktionelle Gruppen, die mit den Isocyanatgruppen reagieren können, an die Polyisocyanate angekoppelt sind. Die stabilisierend wirkenden Gruppen sind ausgewählt aus Phenolen, sterisch gehinderten Aminen (HALS-Verbindungen), Benzotriazolen, Benzophenonen, aromatischen Aminen und Phosphiten.

Unsere unveröffentlichte internationale Anmeldung PCT/EP2007/057427 beschreibt verzweigte Additive, die als Stabilisatoren in Polymeren eingesetzt werden können. Die verzweigten Additive der PCT/EP2007/057427 können

HALS-Verbindungen enthalten und werden zur Stabilisierung von Thermo- und Duroplasten beispielsweise gegen oxidativen, thermischen oder strahlungsinduzierten Abbau eingesetzt.

Die in der WO 2006/048206 A1 offenbarten stabilisierten thermoplastischen Formmassen können verzweigte Stabilisatoren mit HALS-Gruppen enthalten.

Obwohl sich diese Verbindungen und Mischungen in der kommerziellen Praxis bereits bewähren, bleibt doch Raum für Verbesserungen, insbesondere bezüglich der Handhabung der Stabilisatoren und der Mischbarkeit der Stabilisatoren mit den zu stabilisierenden Verbindungen. Es ist oft der Fall, daß Stabilisatoren oder deren Mischungen Festsubstanzen sind, die häufig als pulverförmige Substanzen nicht einfach zu dosieren sind. Weiterhin ist es in einigen Fällen schwierig, Stabilisatoren in fester Form homogen verteilt in die zu stabilisierenden Materialien einzuarbeiten. Es ist dabei häufig nötig, die Stabilisatoren in einem Lösungsmittel zu lösen oder zu dispergieren. Dieses Vorgehen ist jedoch mit zusätzlichen Arbeitsschritten verbunden. Weiterhin haben gelöste oder dispergierte Stabilisatoren geringere Effektstoffkonzentrationen und sind daher ungünstig zu transportieren. Außerdem werden häufig bei der Herstellung oder der Verarbeitung des zu stabilisierenden Materials bereits flüssige Komponenten eingesetzt (zum Beispiel Polyole bei der Herstellung von Polyurethanen oder Weichmacher bei der Verarbeitung von Kunststoffen). In diesem Fall ist natürlich das Einmischen eines flüssigen Additivs besonders günstig.

Eine Aufgabe der vorliegenden Erfindung war es daher Mischungen bereitzustellen, die einfach zu handhaben sind und sich leicht in die zu stabilisierenden Materialien einarbeiten lassen. Eine weitere Aufgabe der Erfindung war es, flüssige Stabilisatormischungen bereitzustellen, die sich in flüssiger Form in die zu stabilisierenden Materialien einarbeiten lassen, nicht zum Austreten aus den stabilisierten Materialien neigen und dabei eine geringe Flüchtigkeit aufweisen. Eine weitere Teilaufgabe der vorliegenden Erfindung war es Mischungen, insbesondere flüssige Mischungen, bereitzustellen, die eine hohe Stabilisatorkonzentration aufweisen und auch wirtschaftlich transportiert werden können. Eine weitere Aufgabe der Erfindung war es Mischungen bereitzustellen, die Materialien effizient gegen die Einwirkung von Licht, Sauerstoff und/oder Wärme stabilisieren.

Dementsprechend wurden die eingangs beschriebenen Mischungen gefunden.

Ausdrücke der Form $C_a$-$C_b$ bezeichnen im Rahmen dieser Erfindung chemische Verbindungen oder Substituenten mit einer bestimmten Anzahl von Kohlenstoffatomen. Die Anzahl an Kohlenstoffatomen kann aus dem gesamten Bereich von a bis b, einschließlich a und b gewählt werden, a ist mindestens 1 und b immer größer als a. Eine weitere Spezifizierung der chemischen Verbindungen oder der Substituenten erfolgt durch Ausdrücke der Form $C_a$-$C_b$-V. V steht hierbei für eine chemische Verbindungsklasse oder Substituentenklasse, beispielsweise für Alkylverbindungen oder Alkylsubstituenten.

Halogen steht für Fluor, Chlor, Brom, oder lod, vorzugsweise für Fluor, Chlor, oder Brom, besonders bevorzugt für Fluor oder Chlor.

Heteroatome sind bevorzugt Sauerstoff, Stickstoff, Schwefel oder Phosphor.

Im Einzelnen haben die verschiedenen angegebenen Sammelbegriffe, falls nicht anders angegeben, folgende Bedeutung:

$C_1$-$C_{30}$-Alkyl: geradkettige oder verzweigte Kohlenwasserstoffreste mit bis zu 30 Kohlenstoffatomen, beispielsweise $C_1$-$C_{18}$-Alkyl, $C_1$-$C_{10}$-Alkyl oder $C_{11}$-$C_{20}$-Alkyl, bevorzugt $C_1$-$C_{10}$-Alkyl beispielsweise $C_1$-$C_6$-Alkyl, $C_1$-$C_4$-Alkyl, $C_1$-$C_3$-Alkyl, wie Methyl, Ethyl, n-Propyl, Isopropyl, oder $C_4$-$C_6$-Alkyl, n-Butyl, sec-Butyl, 1,1-Dimethylethyl, Pentyl, 2-Methylbutyl, 1,1-Dimethylpropyl, 1,2-Dimethylpropyl, 2,2-Dimethylpropyl, 1-Ethylpropyl, Hexyl, 2-Methylpentyl, 3-Methyl-pentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 2-Ethylbutyl, 1,1,2-Trimethylpropyl, 1,2,2-Tri-methylpropyl, 1-Ethyl-1-methylpropyl, 1-Ethyl-2-methylpropyl, oder $C_7$-$C_{10}$-Alkyl, wie Heptyl, Octyl, 2-Ethyl-hexyl, 2,4,4-Trimethylpentyl, 1,1,3,3-Tetramethylbutyl, Nonyl oder Decyl (z.B. 2-Propylheptyl) sowie deren Isomere.

$C_2$-$C_{22}$-Alkenyl: ungesättigte, geradkettige oder verzweigte Kohlenwasserstoffreste mit 2 bis 22 Kohlenstoffatomen und mindestens einer Doppelbindung, bevorzugt einer Doppelbindung, in einer beliebigen Position, beispielsweise $C_2$-$C_{10}$-Alkenyl oder $C_{11}$-$C_{22}$-Alkenyl, bevorzugt $C_2$-$C_{10}$-Alkenyl wie $C_2$-$C_4$-Alkenyl, wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, oder $C_5$-$C_6$-Alkenyl, wie 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-bu-tenyl, 3-Methyl-2-butenyl, 1-Methyl-3-butenyl, 2-Methyl-3-butenyl, 3-Methyl-3-butenyl, 1,1-Dimethyl-2-propenyl, 1 ,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1 ,3-Dimethyl-1-butenyl, 1,3-Dimethyl-2-butenyl, 1,3-Dimethyl-3-butenyl, 2,2-Dimethyl-3-butenyl,

2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl oder 1-Ethyl-2-methyl-2-propenyl, sowie $C_7$-$C_{10}$-Alkenyl, wie die Isomere von Heptenyl, Octenyl, Nonenyl oder Decenyl.

$C_3$-$C_{15}$-Cycloalkyl: monocyclische, gesättigte Kohlenwasserstoffgruppen mit 3 bis zu 15 Kohlenstoffringgliedern, bevorzugt $C_3$-$C_8$-Cycloalkyl wie Cyclopropyl, Cyclobutyl, Cyclopentyl, Cyclohexyl, Cycloheptyl oder Cyclooctyl sowie ein gesättigtes oder ungesättigtes mehrcyclisches System wie z. B. Norbornyl oder Norbenyl. Besonders bevorzugt $C_5$-$C_6$-Cycloalkyl.

Aryl: ein- bis dreikerniges aromatisches Ringsystem enthaltend 6 bis 14 Kohlenstoffringglieder, z. B. Phenyl, Hydroxyphenyl, Naphthyl oder Anthracenyl, bevorzugt ein einbis zweikerniges, besonders bevorzugt ein einkerniges aromatisches Ringsystem.

Heterocyclen: fünf- bis zwölfgliedrige, bevorzugt fünf- bis neungliedrige, besonders bevorzugt fünf- bis sechsgliedrige, Sauerstoff-, Stickstoff- und/oder Schwefelatome, gegebenenfalls mehrere Ringe aufweisende Ringsysteme wie Furyl, Thiophenyl, Pyrryl, Pyridyl, Imidazoyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl.

$C_1$-$C_{20}$-Alkoxy bedeutet eine geradkettige oder verzweigte Alkylgruppe mit 1 bis 20 Kohlenstoffatomen (wie vorstehend genannt), welche über ein Sauerstoffatom (-O-) angebunden sind, beispielsweise $C_1$-$C_{10}$-Alkoxy wie n-Hexoxy, iso-Hexoxy, n-Octoxy, 2-Ethylhexoxy und iso-Octoxy, daneben aber auch Methoxy, Ethoxy, n-Propoxy, iso-Propoxy, n-Butoxy, iso-Butoxy, sec.-Butoxy, tert.-Butoxy, n-Pentoxy, n-Nonoxy, n-Decoxy, oder $C_{11}$-$C_{20}$-Alkoxy wie n-Undecoxy und n-Dodecoxy, bevorzugt $C_1$-$C_{10}$-Alkyloxy, insbesondere bevorzugt $C_1$-$C_8$-Alkoxy, wie beispielweise Methoxy, Ethoxy, Propoxy oder Octoxy.

$C_1$-$C_{22}$-Alkylen: geradkettige oder verzweigte Kohlenwasserstoffreste mit 1 bis 22 Kohlenstoffatomen, beispielsweise $C_2$-$C_{10}$-Alkylen oder $C_{11}$-$C_{22}$-Alkylen, bevorzugt $C_2$-$C_{10}$-Alkylen, insbesondere Methylen, Dimethylen, Trimethylen, Tetramethylen, Pentamethylen oder Hexamethylen.

Unter "flüssigen" Stoffen werden im Rahmen der vorliegenden Anmeldung Stoffe verstanden, die bei Temperaturen von 5 bis 40 °C und einem Druck von 500 bis 1500 mbar (50 bis 150 kPa) einer Formänderung so gut wie keinen, einer Volumenänderung hingegen einen recht großen Widerstand entgegensetzen. Weiterhin sind die flüssigen Stoffe dadurch gekennzeichnet, dass sie eine dynamische Viskosität im Bereich von 1 bis 150.000 mPa·s, bevorzugt bis 10.000 mPa·s aufweisen, bestimmt bei 23°C und 1 bar, beispielsweise nach DIN 53019.

Unter "dendrimer" wird im Zusammenhang mit der vorliegenden Erfindung verstanden, daß der Verzweigungsgrad (Degree of Branching, DB) 99,9 - 100% beträgt. Zur Definition des "Degree of Branching" siehe H. Frey et al., Acta Polym. 1997, 48, 30.

"Hyperverzweigte Polymere" sind molekular und strukturell uneinheitlich. Sie unterscheiden sich von linearen Polymeren dadurch, dass sie Seitengruppen enthalten, die aus den gleichen Monomeren aufgebaut sind wie das Polymerrückgrat. Weiterhin unterscheiden sie sich beispielsweise durch ihre molekulare Uneinheitlichkeit von Dendrimeren und sind mit erheblich geringerem Aufwand herzustellen.

Unter "hyperverzweigt" wird im Zusammenhang mit der vorliegenden Erfindung auch verstanden, dass der Verzweigungsgrad 10 bis 99,9 %, bevorzugt 20 bis 99 %, besonders bevorzugt 20 bis 95 % beträgt.

Der Verzweigungsgrad DB (degree of branching) ist definiert als

$$DB = \frac{T + Z}{T + Z + L} \times 100 \ \%,$$

wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in den Makromolekülen der jeweiligen Stoffe bedeuten.

Unter "verzweigten Polyisocyanaten" werden im Rahmen dieser Erfindung oligomere und polymere Isocyanate verstanden, die Gruppen enthalten, die durch die Umsetzung von mehrwertigen Isocyanaten enstanden sind. Beispielsweise handelt es sich hierbei um Urethan-, Allophanat-, Harnstoff-, Biuret-, Uretdion-, Amid-, Isocyanurat-, Carbodiimid-, Uretonimin-, Oxadiazintrion- oder Iminooxadiazindiongruppen, die teilweise zu Verzweigungen führen. Die verzweigten Polyisocyanate lassen sich daher als oligomere oder polymere Verbindungen (Dimere, Trimere, Tetramere oder höhere Multimere) der mehrwertigen Isocyanate charakterisieren.

Unter "hyperverzweigten Polycarbonaten" werden im Rahmen dieser Erfindung unvernetzte Makromoleküle mit Hydroxyl- und Carbonat- oder Carbamoylchloridgruppen verstanden, die sowohl strukturell als auch molekular uneinheitlich sind. Sie können in einer Variante der vorliegenden Erfindung ausgehend von einem Zentralmolekül analog zu Dendrimeren, jedoch mit uneinheitlicher Kettenlänge der Äste aufgebaut sein. Sie können in einer anderen Variante der vorliegenden Erfindung linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

"Verzweigte Polymere" können beispielsweise verzweigte Polyisocyanate oder hyperverzweigte Polycarbonate sein.

"Stabilisierende Additive" sind bekannt. Ihre Funktion ist es Stoffe gegen den nachteiligen Einfluss von schädlichen Umwelteinflüssen, verursacht beispielsweise durch Licht, Sauerstoff und/oder Wärme zu schützen. Solche stabilisierenden Additive sind beispielsweise Antioxidantien, Hydrolyse-Schutzmittel, Quencher, Flammschutzmittel oder Lichtstabilsatoren.

"Stabilisierend wirkende Gruppen" basieren häufig auf stabilisierenden Additiven. Es handelt sich um den- oder diejenigen Teil(e) des stabilisierenden Additivs, dessen Interaktion mit Licht, Wärme, Sauerstoff, Peroxiden, Radikalen und/oder anderen schädigenden Molekülen oder Bedingungen bewirkt, dass die Schädigung verhindert oder zumindest reduziert wird. Die stabilisierend wirkenden Gruppen sind kovalent an die verzweigten Polymere angebunden. Bevorzugt sind die stabilisierend wirkenden Gruppen kovalent an die Kettenenden der verzweigten Polymere angebunden. Prinzipiell kann ein verzweigtes Polymer eine oder mehrere, auch unterschiedliche stabilisierend wirkende Gruppen enthalten. Die Anzahl und das Verhältnis der stabilisierend wirkenden Gruppen zueinander sind dabei variabel und nur durch die Anzahl der Anknüpfungsstellen im verzweigten Polymer (kovalente Bindungen) zu den stabilisierend wirkenden Gruppen begrenzt. Hierbei muss jedoch nicht jede Anknüpfungsstelle mit einer stabilisierend wirkenden Gruppe umgesetzt sein. Soll ein verzweigtes Polymer, enthaltend stabilisierend wirkende Gruppen (b) z.B. als Antioxidans wirken, so können in diesem Polymer solche stabilisierend wirkende Gruppen enthalten sein, die den oxidativen Abbau eines Kunststoffs verlangsamen oder stoppen.

In den erfindungsgemäßen Mischungen umfasst Komponente (a) einen oder mehrere verschiedene flüssige UV-Absorber.

Flüssige UV-Absorber sind häufig Handelsprodukte. Sie werden beispielsweise unter dem Warenzeichen Uvinul® von der BASF Aktiengesellschaft, Ludwigshafen, verkauft. Die Uvinul® Lichtschutzmittel umfassen Verbindungen der folgenden Klassen: Benzophenone, Benzotriazole, Cyanacrylate, Zimtsäureester, para-Aminobenzoate, Naphthalimide. Darüber hinaus werden weitere bekannte Chromophore eingesetzt, z.B. Hydroxyphenyltriazine oder Oxalanilide. Solche Verbindungen werden beispielsweise alleine oder in Mischungen mit anderen Lichtschutzmittel in kosmetischen Anwendungen, beispielsweise Sonnenschutzmitteln oder zur Stabilisierung von organischen Polymeren eingesetzt. Bevorzugte flüssige UV-Absorber sind Cyanacrylate, Zimtsäureester, Benzotriazole oder Triazine. Besonders bevorzugt eingesetzte flüssige UV-Absorber sind (2-Ethylhexyl)-2-cyano-3,3-diphenylacrylat oder 2-Ethylhexyl-4-methoxycinnamat. Ein ganz besonders bevorzugt eingesetzter flüssiger UV-Absorber ist (2-Ethylhexyl)-2-cyano-3,3-diphenylacrylat. Ein weiterer ganz besonders bevorzugt eingesetzter flüssiger UV-Absorber ist 2-Ethylhexyl-4-methoxycinnamat.

Weitere Beispiele für flüssige UV-Absorber sind: N,N-Dimethyl-4-aminobenzoesäure-2-ethylhexylester, 3,3,5-Trimethylcyclohexalsalicylat, 2-Ethylhexylsalicylat, Isoamyl-4-methoxycinnamat, 2-(2H-Benzotriazol-2-yl)-6-dodecyl-4-methylphenol, 3-(2H-benzotriazol-2-yl)-5-(1,1-dimethylethyl)-4-hydroxy- phenylpropansäure-C7-9-alkyl ester, β-[3-(2-HBenzotriazole-2-yl)-4-hydroxy-5-tert.butylphenyl]-propansäure - poly(ethylenglycol) 300-ester, Bis{β-[3-(2-H-Benzotriazole-2-yl)-4-hydroxy-5-tert.-butytphenyl]-propansäure}-pony(ethylenglycol) 300-ester.

Weitere geeignete flüssige UV-Absorber kann man der Schrift Cosmetic Legislation, Vol.1, Cosmetic Products, European Commission 1999, S. 64-66 entnehmen, auf die hiermit explizit Bezug genommen wird.

Geeignete flüssige UV-Absorber werden außerdem in den Zeilen 14 bis 30 ([0030]) auf Seite 6 der EP 1 191 041 A2 beschrieben. Dem Fachmann ist bekannt, welche dieser UV-Absorber flüssig sind. Auf diese wird hier Bezug genommen und diese Literaturstelle wird zum Offenbarungsgehalt der vorliegenden Erfindung gemacht.

Die flüssigen UV-Absorber umfassen nicht Tinuvin 384-2 (95 % Benzenepropanoic acid, 3-(2H-benzotriazol-2-yl)-5-(1,1-dimethylethyl)-4-hydroxy-, C7-9-branched and linear alkyl esters; 5 % 1-methoxy-2-propyl acetate) einen UV-Absorber der Firma Ciba Speciality Chemical Inc.

Weiterhin besteht in den erfindungsgemäßen Mischungen Komponente (b) aus einem oder mehreren verschiedenen verzweigten Polymeren, enthaltend stabilisierend wirkende Gruppen.

In einer bevorzugten Ausführungsform der erfindungsgemäßen Mischung sind die verzweigten Polymere, enthaltend stabilisierend wirkende Gruppen (b), oder deren Mischungen flüssig.

Verzweigte Polymere, enthaltend stabilisierend wirkende Gruppen (b), sind beispielsweise als "verzweigte polymere Stabilisatoren" in der WO 2004/094505 A1 (S. 4, Z. 12 - Z. 26) offenbart. Auf die dort offenbarten Stabilisatoren wird hier explizit Bezug genommen.

Bevorzugt weisen die verzweigten Polymere, enthaltend stabilisierend wirkende Gruppen (b) eine hyperverzweigte Struktur auf.

Verzweigte Polymere, enthaltend stabilisierend wirkende Gruppen (b), lassen sich beispielsweise nach den in der WO 2004/094505 A1 beschriebenen allgemeinen Verfahren herstellen (S. 8, Z. 71 - S. 13, Z. 33). Auf die dort offenbarten Herstellverfahren wird hier explizit Bezug genommen.

Bezüglich der verzweigten Polymere, enthaltend stabilisierend wirkende Gruppen (b) und ihrer Herstellung, insbesondere auch bezüglich der dort beschriebenen stabilisierenden Gruppen (Wirkstoffgruppen, S. 14, Z. 1 - S. 22, Z. 4) wird auf die WO 2004/094505 A1 vollinhaltlich Bezug genommen. Stabilisierend wirkende Verbindungen, auf denen die stabilisierenden Gruppen beruhen, sind kommerziell erhältlich, oder durch einfache, dem Fachmann bekannte Umsetzungen, aus kommerziell erhältlichen Verbindungen zugänglich.

Bevorzugt weisen die erfindungsgemäßen Mischungen verzweigter Polymere, enthaltend stabilisierend wirkende Gruppen, als Komponente (b), mit einem zahlenmittleren Molekulargewicht Mn von 100 bis 20000 g/mol, bevorzugt 100 -15000 g/mol, besonders bevorzugt 100 -10000 g/mol und ganz besonders bevorzugt 200 - 5000 g/mol auf.

Bevorzugt enthält die erfindungsgemäße Mischung als Komponente (b) verzweigte Polymere enthaltend HALS-Verbindungen als stabilisierend wirkende Gruppen.

In einer bevorzugten Ausführungsform der erfindungsgemäßen Mischungen, enthalten die verzweigten Polymere, enthaltend stabilisierend wirkende Gruppen (b), Carbonatgruppen. Bevorzugt sind in diesem Fall die Polymere hyperverzweigt.

Die Herstellung der hyperverzweigten Polymere, enthaltend Carbonatgruppen und stabilisierend wirkende Gruppen (b) kann nach den in unserer internationalen Anmeldung PCT/EP2007/057427 angegebenen Methoden erfolgen.

Hyperverzweigte Polycarbonate (= hyperverzweigte Polymere, enthaltend Carbonatgruppen) mit stabilisierend wirkenden Gruppen lassen sich nach der oben angegebenen Schrift erhalten durch Umsetzung von

(A) mindestens einer Verbindung mit mindestens drei alkoholischen Hydroxylgruppen, im Folgenden auch als Verbindung (A) oder- je nach Zahl der alkoholischen Hydroxylgruppen beispielsweise Triol (A) oder Tetrol (A) oder Pentol (A) genannt, mit

(B) mindestens einem Reagenz der Formel I, im Folgenden auch als Reagenz (B) bezeichnet,

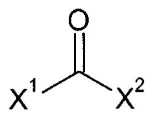

I

(C) und mindestens einem Reagenz der allgemeinen Formel $X^3$-$(A^1)_m$-$X^4$, im Folgenden auch als Reagenz (C) bezeichnet,

wobei die Variablen wie folgt definiert sind:

$X^1$, $X^2$ gleich oder verschieden und gewählt aus Halogen, beispielsweise Brom und insbesondere Chlor, $C_1$-$C_{20}$-Alkoxy, bevorzugt $C_1$-$C_6$-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy,
besonders bevorzugt Methoxy, Ethoxy, n-Butoxy und tert.-Butoxy; Aryloxy, insbesondere Phenoxy, 1-Naphthoxy, 2-Naphthoxy oder mit $C_1$-$C_4$-Alkyl substituiertes $C_6$-$C_{10}$-Aryloxy,
insbesondere o-Tolyloxy oder p-Tolyloxy,
und O-C(=O)-Halogen, insbesondere O-C(=O)-Cl.
oder $X^1$ und $X^2$ gemeinsam eine Gruppe der Formel O-Q-O darstellt, wobei Q eine gegebenenfalls substituierte $\alpha,\omega$-Alkylen Gruppe, insbesondere Ethylen beschreibt.

Besonders bevorzugte Reagenzien (B) sind Phosgen, Chlorameisensäureethylester, Diphosgen und Triphosgen, sowie Dialkylcarbonate oder Diarylcarbonate, beispielsweise Dimethylcarbonat, Diethylcarbonat, Dibutylcarbonat (Di-n-butylcarbonat, Di-tert.-butylcarbonat), Di-tert.-butyldicarbonat, Di-tert.-butyltricarbonat, Diphenylcarbonat, Ditolylcarbonat, Diethylencarbonat, Ethylencarbonat, Propylencarbonat. Ganz besonders bevorzugt sind Dimethylcarbonat, Diethylcarbonat, Dibutylcarbonat, Ethylencarbonat, Propylencarbonat.

Verbindung (A) wird gewählt aus Verbindungen mit mindestens drei alkoholischen Hydroxylgruppen, beispielsweise Triolen (A), Tetrolen (A) oder Pentole (A).

Beispiele für geeignete Triole (A) sind aliphatische, aromatische und benzylische Triole, die nicht alkoxyliert oder pro Hydroxylgruppe ein- bis 100-fach alkoxyliert sein können, bevorzugt mit $C_2$-$C_4$-Alkylenoxid alkoxyliert, beispielsweise Ethylenoxid, Propylenoxid oder 1,2-Butylenoxid oder Mischungen aus Ethylenoxid und Propylenoxid und/oder Butylenoxid, und insbesondere mit Ethylenoxid oder Propylenoxid alkoxyliert.

Beispielhaft seien genannt: Glycerin, Trimethylolmethan, 1,1,1-Trimethylolethan, 1,1,1-Trimethylolpropan, 1,2,4-Butantriol, Tris(hydroxy-methyl)amin, Tris(hydroxyethyl)amin, Tris-(hydroxypropyl)-amin, Tris(hydroxymethyl)isocyanurat, Tris-(hydroxyethyl)-isocyanurat, Phloroglucinol, Trihydroxytoluol, Trihydroxydimethylbenzol, Phloroglucide, 1,3,5-Benzoltrimethanol, 1,1,1-Tris(4'-hydroxy-phenyl)methan, 1,1,1-Tris(4'-hydroxyphenyl)-ethan, tri- oder höherfunktionelle Polyetherole auf Basis tri- oder höherfunktioneller Alkohole und Ethylenoxid, Propylenoxid oder Butylenoxid, oder Polyesterole. Dabei sind Glycerin, 1,1,1-Trimethylolpropan sowie deren Polyetherole auf Basis von Ethylenoxid oder Propylenoxid besonders bevorzugt.

Als bevorzugte Beispiele seien genannt Glycerin und $(HO-CH_2)_3C-X^7$, nicht alkoxyliert oder pro Hydroxylgruppe ein- bis hundertfach mit $C_2$-$C_4$-Alkylenoxid alkoxyliert, wobei $X^7$ gewählt wird aus einem Stickstoffatom und C-$R^6$, und $R^6$ gewählt wird aus Wasserstoff und $C_1$-$C_4$-Alkyl, wie Methyl, Ethyl, n-Propyl, iso-Propyl, n-Butyl, iso-Butyl, sec.-Butyl und tert.-Butyl. Ganz besonders bevorzugt sind Glycerin, Trimethylolethan, Trimethylolpropan, 1,2,4-Butan-triol, ein- bis zwanzigfach alkoxyliertes Glycerin und einbis zwanzigfach alkoxyliertes 1,1,1-Trimethylolpropan ($R^6 = C_2H_5$), wobei als Alkoxylierungsagenzien bevorzugt Ethylenoxid oder Propylenoxid oder deren Mischungen eingesetzt werden.

Beispiele für geeignete Tetrole (A) sind Pentaerythrit, Bis(tri-methylolpropan) und Diglycerin, die nicht alkoxyliert oder pro Hydroxylgruppe ein- bis 100-fach alkoxyliert sein können, bevorzugt mit $C_2$-$C_4$-Alkylenoxid alkoxyliert, beispielsweise Ethylenoxid, Propylenoxid oder 1,2-Butylenoxid oder Mischungen aus Ethylenoxid und Propylenoxid und/oder Butylenoxid, und insbesondere mit Ethylenoxid oder Propylenoxid alkoxyliert.

Beispiele für geeignete Pentole (A) umfassen auch Verbindungen mit mehr als 5 alkoholischen Hydroxylgruppen pro Molekül. Genannt seien Triglycerin, Polyglycerine, Hexahydroxybenzol, oder Zucker, wie zum Beispiel Sorbose, Mannose oder Glucose, insbesondere reduzierte Zucker wie beispielsweise Sorbitol, die nicht alkoxyliert oder pro Hydroxylgruppe ein- bis 100-fach alkoxyliert sein können, bevorzugt mit $C_2$-$C_4$-Alkylenoxid alkoxyliert, beispielsweise Ethylenoxid, Propylenoxid oder 1,2-Butylenoxid oder Mischungen aus Ethylenoxid und Propylenoxid und/oder Butylenoxid, und insbesondere mit Ethylenoxid oder Propylenoxid alkoxyliert.

Bevorzugt ist die Verbindung (A) ein dreiwertiger oder vierwertiger Alkohol, nämlich Glycerin, TMP (1,1,1-Tri (hydroxymethyl)propan, Trimethylolpropan, CAS# 77-99-6) oder Pentaerythrit, der statistisch verethert wurde mit von 1 bis 5 Mol Ethylenoxid, Propylenoxid, Butylenoxid oder Gemischen daraus pro Mol Hydroxylgruppen des drei- oder vierwertigen Alkohols.

Weiterhin setzt man mit mindestens einem Reagenz der allgemeinen Formel $X^3$-$(A^1)_m$-$X^4$ um, im Rahmen der vorliegenden Erfindung auch als Reagenz (C) bezeichnet, wobei

$X^3$ eine funktionelle Gruppe, gewählt aus OH, SH, $NH_2$, NH-$C_1$-$C_4$-Alkyl, wobei $C_1$-$C_4$-Alkyl gewählt wird aus Methyl, Ethyl, n-Propyl, iso-Propyl, n-Butyl, iso-Butyl, sec.-Butyl und tert.-Butyl, wie NH-$CH_3$, NH-$C_2H_5$, NH-n-$C_3H_7$, NH-iso-$C_3H_7$, NH-n-$C_4H_9$, NH-iso-$C_4H_9$, NH-sec.-$C_4H_9$, NH-tert.-$C_4H_9$, weiterhin Isocyanat, Epoxy wie beispielsweise

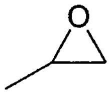

oder

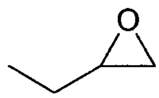

COOH, $COOR^{12}$, C(=O)-O-C(=O), C(=O)-Cl, bevorzugt sind COOH, $COOR^{12}$, OH und $NH_2$,

$R^{12}$ $C_1$-$C_4$-Alkyl oder $C_6$-$C_{10}$-Aryl

$A^1$ eine Einfachbindung oder ein Spacer, Beispiele für Spacer $A^1$ sind para-Phenylen, meta-Phenylen, bevorzugt $C_2$-$C_{100}$-Alkylen, bevorzugt $C_2$-$C_{50}$-Alkylen, besonders bevorzugt bis $C_{20}$-Alkylen, verzweigt oder unverzweigt, wobei gegebenenfalls ein bis 6 nicht-benachbarte $CH_2$-Gruppen durch jeweils ein Schwefelatom, auch oxidiert, oder Sauerstoffatom ersetzt sein können. Beispielhaft seien folgende Spacer genannt:
$-CH_2-$, $-CH_2-CH_2-$, $-(CH_2)_3-$, $-(CH_2)_4-$, $-(CH_2)_5-$, $-(CH_2)_6-$, $-(CH_2)_7-$, $-(CH_2)_8-$, $-(CH_2)_9-$, $-(CH_2)_{10}-$, $-(CH_2)_{12}-$, $-(CH_2)_{14}-$, $-(CH_2)_{16}-$, $-(CH_2)_{18}-$, $-(CH_2)_{20}-$, $-CH_2-CH(CH_3)-$, $-CH_2-CH(C_2H_5)-$, $-CH_2-CH(CH[CH_3]_2)-$, $-CH_2-CH(n-C_3H_7)-$, $-[CH(CH_3)]_2-$, $-CH(CH_3)-CH_2-CH_2-CH(CH_3)-$, $-CH(CH_3)-CH_2-CH(CH_3)-$, $-CH_2-C(CH_3)_2-CH_2-$, $-CH_2-CH(n-C_4H_9)-$, $-CH_2-CH(iso-C_3H_7)-$, $-CH_2-CH(tert.-C_4H_9)-$,

$-CH_2-O-$, $-CH_2-O-CH_2-$, $-(CH_2)_2-O-(CH_2)_2-$, $-[(CH_2)_2-O]_2-(CH_2)_2-$, $-[(CH_2)_2-O]_3-(CH_2)_2-$, $-CH_2-S-$, $-CH_2-S-CH_2-$, $-(CH_2)_2-S-(CH_2)_2-$, $-[(CH_2)_2-S]_2-(CH2)_2-$, $-[(CH_2)_2-S]_3-(CH_2)_2-$, $-CH_2-SO-CH_2-$, $-CH_2-SO_2-CH_2-$,
ganz besonders bevorzugte Spacer sind $C_1$-$C_{10}$-Alkylengruppen, verzweigt oder unverzweigt, wie $-CH_2-$, $-CH_2-CH_2-$, $-(CH_2)_3-$, $-(-CH_2)_4-$, $-(CH_2)_5-$, $-(CH_2)_6-$, $-(CH_2)_7-$, $-(CH_2)_8-$, $-(CH_2)_9-$, $-(CH_2)_{10}-$.

m Null oder eins,

$X^4$ eine Gruppe, gewählt aus Phenolgruppen, Benzophenonen, aromatischen Aminen und stickstoffhaltigen Heterocyclen, jeweils substituiert oder unsubstituiert;

bevorzugt eine Gruppe, gewählt aus stickstoffhaltigen Heterocyclen, insbesondere HALS-Gruppen.

Dabei übernimmt $X^4$ die Rolle der stabilisierend wirkenden Gruppe. Die Reagenzien (C) sind größtenteils kommerziell erhältlich (z.B. 2,2,6,6-Tetramethylpiperidinol oder 1, 2,2,6,6-Pentamethylpiperidinol) oder durch Standardmethoden der organischen Synthese aus diesen kommerziell erhältlichen Verbindungen zugänglich.

Beispiele für Phenolgruppen sind insbesondere sterisch gehinderte Phenolgruppen, beispielsweise mit einer oder zwei Isopropylgruppen oder tert.-Butylgruppen in ortho-Stellung zur phenolischen OH-Gruppe substituierte Phenolgruppen. Besonders bevorzugte Beispiele für Phenolgruppen sind

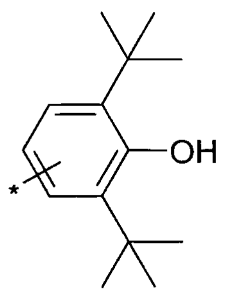
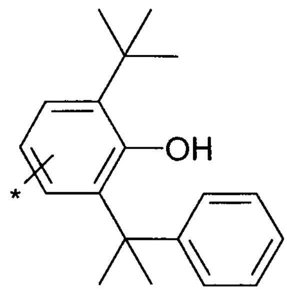
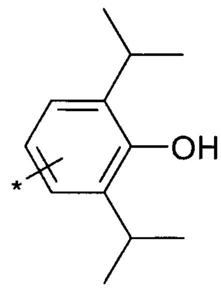

Ganz besonders bevorzugte Beispiele für Phenolgruppen ist die 3-(3,5-Di-tert.-butyl-4-hydroxyphenyl)propionsäuregruppe.

Beispiele für Benzophenongruppen sind insbesondere

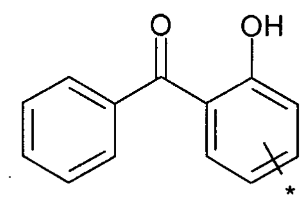
und
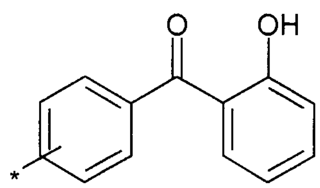

Beispiele für aromatische Amine sind

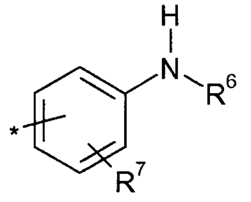

wobei die Variablen wie folgt definiert sind:

$R^6$ ist gewählt aus Wasserstoff, $C_1$-$C_{12}$-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl;
besonders bevorzugt $C_1$-$C_4$-Alkyl wie Methyl, Ethyl, n-Propyl, iso-Propyl, n-Butyl, iso-Butyl, sec.-Butyl und tert.-Bu-

tyl,
$C_3$-$C_{12}$-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
$C_6$-$C_{14}$-Aryl, beispielsweise 1-Naphthyl, 2-Naphthyl, 1-Anthracenyl, 2-Anthracenyl, 9-Anthracenyl und insbesondere Phenyl, Benzyl.

$R^7$ ist gewählt aus Wasserstoff,
$C_1$-$C_4$-Alkyl, Methyl, Ethyl, n-Propyl, iso-Propyl, n-Butyl, iso-Butyl, sec.-Butyl und tert.-Butyl.

Stickstoffhaltige Heterocyclen können aromatisch, einfach ungesättigt oder gesättigt sein. Stickstoffhaltige Heterocyclen können einen, zwei oder drei Stickstoffatome enthalten, und sie können einen oder mehrere Substituenten tragen, bevorzugt sind im Falle von aromatischen Heterocyclen ein oder mehrere Hydroxyphenylsubstituenten. Beispiele für aromatische Heterocyclen sind Benzotriazole und Triazine, insbesondere der Formeln

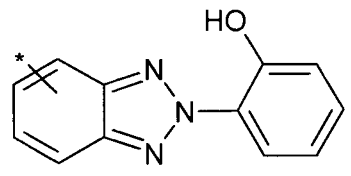
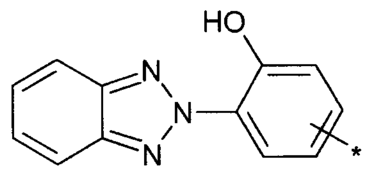

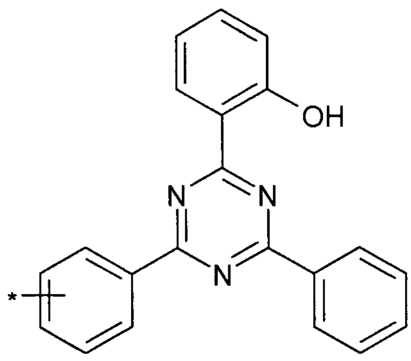
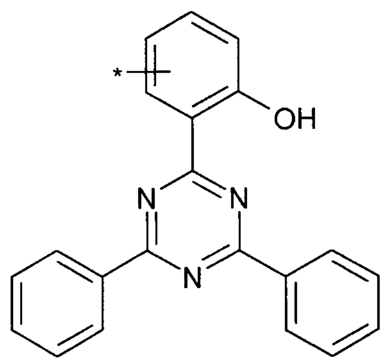

die jeweils einen oder mehrere weitere Substituenten tragen können, beispielsweise Hydroxyl oder $C_1$-$C_4$-Alkyl, insbesondere tert.-Butyl, weiterhin $C(CH_3)_2(C_6H_5)$ oder $C(CH_3)_2OH$ oder Perfluor-$C_1$-$C_4$-alkyl , insbesondere $CF_3$ oder n-$C_4F_9$. Spezifische Beispiele für Stickstoffhaltige aromatische Heterocyclen mit einem oder mehreren Substituenten sind

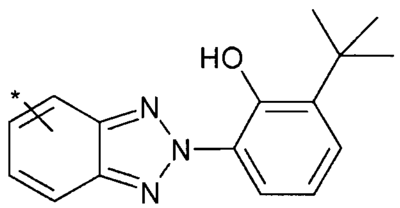
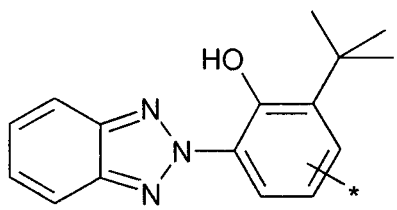

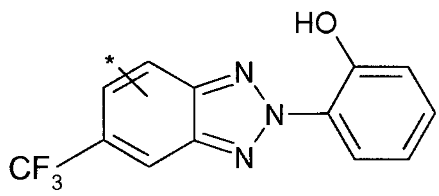
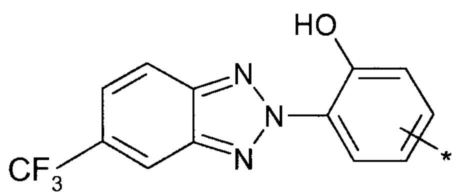

Beispiele für gesättigte stickstoffhaltige Heterocyclen sind insbesondere die als HALS (Hindered Amine Light Stabilizer) bekannten Substituenten der Formel Formel II a sowie solche der Formel IIb,

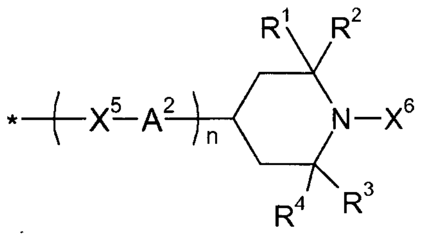

II a

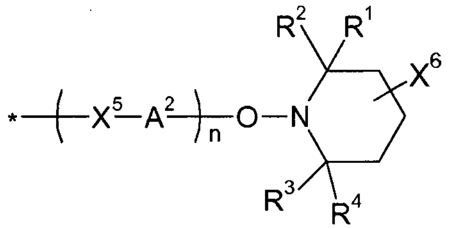

II b

wobei die Variablen wie folgt definiert sind:

$R^1$, $R^2$, $R^3$ und $R^4$ gleich oder verschieden und unabhängig voneinander $C_1$-$C_{12}$-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl;
besonders bevorzugt $C_1$-$C_4$-Alkyl wie Methyl, Ethyl, n-Propyl, iso-Propyl, n-Butyl, iso-Butyl, sec.-Butyl und tert.-Butyl,
insbesondere sind $R^1$, $R^2$, $R^3$ und $R^4$ jeweils gleich und jeweils Methyl,
$C_3$-$C_{12}$-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
an oder jeweils $R^1$ und $R^2$ und/oder $R^3$ und $R^4$ bilden zusammen mit dem Kohlenstoffatom, das sie gemeinsam gebunden sind, einen 4 bis 8 gliedrigen Ring,

$X^5$ ein Sauerstoffatom, ein Schwefelatom, eine NH-Gruppe, eine N-($C_1$-$C_4$-Alkyl)-gruppe, eine Carbonylgruppe; bevorzugt ein Sauerstoffatom,

$A^2$ eine Einfachbindung oder ein Spacer. Beispiele für Spacer $A^2$ sind para-Phenylen, meta-Phenylen, bevorzugt $C_1$-$C_{20}$-Alkylen, verzweigt oder unverzweigt, wobei gegebenenfalls ein bis 6 nicht-benachbarte $CH_2$-Gruppen durch jeweils ein Schwefelatom, auch oxidiert, oder ein Sauerstoffatom ersetzt sein können. Beispielhaft seien folgende Spacer genannt:
$-CH_2-$, $-CH_2-CH_2-$, $-(CH_2)_3-$, $-(CH_2)_4-$, $-(CH_2)_5-$, $-(CH_2)_6-$, $-(CH_2)_7-$, $-(CH_2)_8-$, $-(CH_2)_9-$, $-(CH_2)_{10}-$, $-(CH_2)_{12}-$, $-(CH_2)_{14}-$, $-(CH_2)_{16}-$, $-(CH_2)_{18}-$, $-(CH_2)_{20}-$, $-CH_2-CH(CH_3)-$, $-CH_2-CH(C_2H_5)-$, $-CH_2-CH(CH[CH_3]_2)-$, $-CH_2-CH(n-C_3H_7)-$, $-[CH(CH_3)]_2-$, $-CH(CH_3)-CH_2-CH_2-CH(CH_3)-$, $-CH(CH_3)-CH_2-CH(CH_3)-$, $-CH_2-C(CH_3)_2-CH_2-$, $-CH_2-CH(n-C_4H_9)-$, $-CH_2-CH(iso-C_3H_7)-$, $-CH_2-CH(tert.-C_4H_9)-$, $-CH_2-O-$, $-CH_2-O-CH_2-$, $-(CH_2)_2-O-(CH_2)_2-$, $-[(CH_2)_2-O]_2-(CH_2)_2-$, $-[(CH_2)_2-O]_3-(CH_2)_2-$, $-CH_2-S-$, $-CH_2-S-CH_2-$, $-(CH_2)_2-S-(CH_2)_2-$, $-[(CH_2)_2-S]_2-(CH_2)_2-$, $-[(CH_2)_2-S]_3-(CH_2)_2-$, $-CH_2-SO-CH_2-$, $-CH_2-SO_2-CH_2-$,
bevorzugte Spacer $A^2$ sind $C_2$-$C_{10}$-Alkylengruppen, verzweigt oder unverzweigt, wie $-CH_2-CH_2-$, $-(CH_2)_3-$, $-(CH_2)_4-$, $-(CH_2)_5-$, $-(CH_2)_6-$, $-(CH_2)_7-$, $-(CH_2)_8-$, $-(CH_2)_9-$, $-(CH_2)_{10}-$;
bevorzugt ist $A^2$ eine Einfachbindung,

n null oder eins,

$X^6$ Wasserstoff, Sauerstoff,
O-$C_1$-$C_{19}$-Alkyl, bevorzugt $C_1$-$C_6$-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy oder Ethoxy,
$C_1$-$C_{12}$-Alkyl, bevorzugt Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl,
$C_2$-$C_{18}$-Acyl, beispielsweise Acetyl, Propionyl, Butyryl, Benzoyl, Stearyl,
oder Aryloxycarbonyl mit 7 bis 12 C-Atomen, beispielsweise $C_6H_5$-OCO.

Beispiele für besonders gut geeignete HALS-Verbindungen (stabilisierende Additive), auf denen die oben

genannten stabilisierend wirkenden Verbindungen der Formeln IIa oder IIb basieren können, sind
4-Amino-2,2,6,6- tetramethylpiperidin,
4-Amino-1,2,2,6,6- pentamethylpiperidin,
4-Hydroxy-2,2,6,6- tetramethylpiperidin,
4-Hydroxy-1,2,2,6,6- pentamethylpiperidin,
4-Butylamino-2,2,6,6-tetramethylpiperidin,
4-Butylamino-1,2,2,6,6-pentamethylpiperidin,
4-Amino-2,2,6,6- tetramethylpiperidin-N-oxyl,
4-Hydroxy-2,2,6,6- tetramethylpiperidin-N-oxyl,
4-Butylamino-2,2,6,6-tetramethylpiperidin-N-oxyl,
4-Hydroxy-2,2,6,6-tetramethyl-1-oxytoxypiperidin,
4-Amino-2,2,6,6-tetramethyl-1-oxytoxypiperidin,
4-Butylamino-2,2,6,6-tetramethyl-1-octoxypiperidin

Ganz besonders gut sind 4-Amino-2,2,6,6- tetramethylpiperidin, 4-Amino-1,2,2,6,6-pentamethylpiperidin, 4-Hydroxy-2,2,6,6- tetramethylpiperidin, 4-Hydroxy-1,2,2,6,6-pentamethylpiperidin, 4-Amino-2,2,6,6- tetramethylpiperidin-N-oxyl und 4-Hydroxy-2,2,6,6- tetramethylpiperidin-N-oxyl geeignet.

In einer bevorzugten Ausführungsform der erfindungsgemäßen Mischung wird das hyperverzweigte Polycarbonat enthaltend HALS-Verbindungen erhalten durch die Umsetzung einer Mischung enthaltend:

(A) ein oder mehrere mehrwertige Alkohole,
(B) ein oder mehrere Carbonate,
(C) ein oder mehrere HALS-Verbindungen, die eine funktionelle Gruppe enthalten, die mit (A) und/oder (B) reagieren.

Insbesondere geeignet sind auch HALS-Verbindungen der allgemeinen Formel (III):

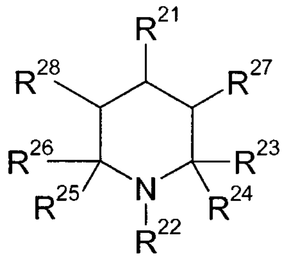

(III)

worin,

| | |
|---|---|
| $R^{21}$ | OH, SH, NHR oder $NH_2$, |
| $R^{22}$ | H, $C_1$-$C_{22}$-Alkyl, $C_1$-$C_8$-Alkoxy, |
| $R^{23}$, $R^{24}$, $R^{25}$, $R^{26}$ | unabhängig voneinander, gleich oder verschieden, $C_1$-$C_{22}$-Alkyl oder $R^{23}$ und $R^{24}$ und/oder $R^{25}$ und $R^{26}$ gemeinsam mit dem Kohlenstoffatom, an das sie gebunden sind, einen 4-, 5-, 6-, 7- oder 8-gliedrigen Ring bilden, |
| $R^{27}$, $R^{28}$ | unabhängig voneinander, gleich oder verschieden, H, $C_1$-$C_{22}$-Alkyl |

bedeuten, und
$R^{21}$ mit (A) und/oder (B) reagiert.

Ganz besonders bevorzugt sind $R^{21}$ = OH, $R^{22}$ = $R^{23}$ = $R^{24}$ = $R^{25}$ = $R^{26}$ = Methyl und $R^{27}$ = $R^{28}$= H.

In einer Ausführungsform der vorliegenden Erfindung enthalten erfindungsgemäße Mischungen hyperverzweigte Polycarbonate mit stabilisierend wirkenden Gruppen, die dadurch gekennzeichnet sind, dass diese Polycarbonate eine dynamische Viskosität im Bereich von 100 bis 150.000 mPa·s, bevorzugt bis 10.000 mPa·s aufweisen, bestimmt bei 23°C, beispielsweise nach DIN 53019.

In einer Ausführungsform der vorliegenden Erfindung enthalten erfindungsgemäße Mischungen hyperverzweigte Polycarbonate mit stabilisierend wirkenden Gruppen, die dadurch gekennzeichnet sind, dass diese Polycarbonate ein Zahlenmittel des Molekulargewichtes ($M_n$) von 100 bis 15.000, vorzugsweise von 200 bis 12.000 und insbesondere von 400 bis 10.000 g/mol, bestimmbar beispielsweise mit GPC, Polymethylmethacrylat (PMMA) als Standard und Dimethylacetamid als Laufmittel.

In einer Ausführungsform der vorliegenden Erfindung enthalten die erfindungsgemä-βen Mischungen hyperverzweigte Polycarbonate mit stabilisierend wirkenden Gruppen, die dadurch gekennzeichnet sind, dass diese Polycarbonate eine Glastemperatur $T_g$ im Bereich von -70 bis 10°C aufweisen, bestimmt durch Differentialthermoanalyse (Differential Scanning Calorimetry).

In einer Ausführungsform der vorliegenden Erfindung enthalten die erfindungsgemä-βen Mischungen hyperverzweigte Polycarbonate mit stabilisierend wirkenden Gruppen, die dadurch gekennzeichnet sind, dass diese Polycarbonate eine OH-Zahl im Bereich von 0 bis 600, vorzugsweise 1 bis 550 und insbesondere von 1 bis 500 mg KOH/g (gemäß DIN 53240, Teil 2) aufweisen.

In einer bevorzugten Ausführungsform der vorliegenden Erfindung enthalten erfindungsgemäße Mischungen hyperverzweigte Polycarbonate mit stabilisierend wirkenden Gruppen, die dadurch gekennzeichnet sind, dass diese Polycarbonate eine dynamische Viskosität im Bereich von 100 bis 150.000 mPa·s, bevorzugt bis 10.000 mPa·s aufweisen, bestimmt bei 23°C, beispielsweise nach DIN 53019 und dass diese Polycarbonate ein Zahlenmittel des Molekulargewichtes ($M_n$) von 100 bis 15.000, vorzugsweise von 200 bis 12.000 und insbesondere von 400 bis 10.000 g/mol, bestimmbar beispielsweise mit GPC, Polymethylmethacrylat (PMMA) als Standard und Dimethylacetamid als Laufmittel aufweisen und dass diese Polycarbonate eine Glastemperatur $T_g$ im Bereich von -70 bis 10°C aufweisen, bestimmt durch Differentialthermoanalyse (Differential Scanning Calorimetry) und dass diese Polycarbonate eine OH-Zahl im Bereich von 0 bis 600, vorzugsweise 1 bis 550 und insbesondere von 1 bis 500 mg KOH/g (gemäß DIN 53240, Teil 2) aufweisen.

Zur Herstellung von hyperverzweigtem Polycarbonat kann man optional noch eine oder mehrere Verbindungen (D) mit zwei alkoholischen Hydroxylgruppen pro Molekül zusetzen, kurz auch Verbindungen (D) genannt. Beispiele geeigneter Verbindungen (D) umfassen Ethylenglykol, Diethylenglykol, Triethylenglykol, 1,2-und 1,3-Propandiol, Dipropylenglykol, Tripropylenglykol, Neopentylglykol, 1,2-, 1,3- und 1,4-Butandiol, 1,2-, 1,3-und 1,5-Pentandiol, Hexandiol, Cyclopentandiol, Cyclohexandiol, Cyclohexandimethanol, Bis(4-Hydroxycyclohexyl)methan, Bis(4-Hydroxycyclo-hexyl) ethan, 2,2-Bis(4-Hydroxycyclohexyl)propan, 1,1'-Bis(4-Hydroxyphenyl)-3,3-5-trimethylcyclohexan, Resorcin, Hydrochinon, 4,4'-Dihydroxyphenyl, Bis-(4-bis(hydroxy-phenyl)sulfid, Bis(4-hydroxyphenyl)sulfon, Bis(hydroxymethyl)benzol, Bis (hydroxy-methyl)toluol, Bis(p-hydroxyphenyl)methan, Bis(p-hydroxyphenyl)ethan, 2,2-Bis(p-hydroxyphenyl)propan, 1,1-Bis(p-hydroxyphenyl)cyclohexan, Dihydroxybenzophenon, difunktionelle Polyetherpolyole auf Basis Ethylenoxid, Propylenoxid, Butylenoxid oder deren Gemische, Polytetrahydrofuran, Polycaprolacton oder Polyesterole auf Basis von Diolen und Dicarbonsäuren.

Weiterhin können die in den erfindungsgemäßen Mischungen enthaltenen hyperverzweigte Polycarbonate neben den bereits durch die Reaktion erhaltenden funktionellen Gruppen (Hydroxylgruppen, Carbonatgruppen oder Carbamoylchloridgruppen) eine oder mehrere weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während der eigentlichen Bildung der Polycarbonate durch Polykondensation Komponenten zu, die neben Hydroxyl- oder Carbonatgruppen weitere funktionelle Gruppen oder funktionelle Elemente besitzen, so erhält man ein hyperverzweigtes Polycarbonat-Polymer mit statistisch verteilten von den Carbonat-, Carbamoylchlorid oder Hydroxylgruppen verschiedenen Funktionalitäten.

Derartige Effekte lassen sich zum Beispiel durch Zusatz von Verbindungen während der Polykondensation erzielen, die neben Hydroxylgruppen, Carbonatgruppen oder Carbamoylchloridgruppen weitere funktionelle Gruppen oder funktionelle Elemente, wie Mercaptogruppen, primäre, sekundäre oder tertiäre Aminogruppen, Ethergruppen, Carbonsäuregruppen oder deren Derivate, Sulfonsäuregruppen oder deren Derivate, Phosphonsäuregruppen oder deren Derivate, Silangruppen, Siloxangruppen, Arylreste oder langkettige Alkylreste tragen. Zur Modifikation mittels Carbamat-Gruppen lassen sich beispielsweise Ethanolamin, Propanolamin, Isopropanolamin, 2-(Butylamino)-ethanol, 2-(Cyclohexylamino)ethanol, 2-Amino-1-butanol, 2-(2'-Amino-ethoxy)ethanol oder höhere Alkoxylierungsprodukte des Ammoniaks, 4-Hydroxy-piperidin, 1-Hydroxyethylpiperazin, Diethanolamin, Dipropanolamin, Diisopropanol-amin, Tris(hydroxymethyl)aminomethan,Tris(hydroxyethyl)aminomethan, Ethylendiamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von Triethanolamin, Tripropanolamin, N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Zugabe von Dicarbonsäuren, Tricarbonsäuren, Dicarbonsäureestern, wie bespielsweise Terephthalsäuredimethylester oder Tricarbonsäureestern lassen sich Estergruppen erzeugen. Durch Reaktion mit langkettigen Alkanolen oder Alkandiolen lassen sich langkettige Alkylreste einbringen. Die Reaktion mit Alkyl- oder Aryldiisocyanaten generiert Alkyl-, Aryl- und Urethangruppen aufweisende Polycarbonate, die Zugabe von primären oder sekundären Aminen führt zur Einbringung von Urethan- oder Harnstoffgruppen.

Eine nachträgliche Funktionalisierung kann man erhalten, indem das erfindungsgemäße hyperverzweigte Polycarbonat in einem zusätzlichen Verfahrensschritt mit einem geeigneten Funktionalisierungsreagenz, welches mit den OH- und/oder Carbonat- oder Carbamoylchlorid-Gruppen des Polycarbonates reagieren kann, umsetzt.

Hydroxylgruppen enthaltende erfindungsgemäße hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten. Weiterhin kann man Hydroxylgruppen enthaltende erfindungsgemäße hyperverzweigte Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführen.

Bevorzugt geht man bei der Herstellung von hyperverzweigten Polycarbonaten, enthaltend stabilisierend wirkende Gruppen (b) so vor, dass man

(A) mindestens eine Verbindung mit mindestens drei alkoholischen Hydroxylgruppen pro Molekül mit
(B) mindestens einem Reagenz der allgemeinen Formel I,
(C) mindestens einem Reagenz der allgemeinen Formel $X^3$-$(A^1)_m$ $X^4$
(D) und gegebenenfalls mindestens einer Verbindung mit zwei alkoholischen Hydroxylgruppen pro Molekül

miteinander vermischt und auf eine Temperatur im Bereich von 60 bis 260°C erhitzt, bevorzugt 80 bis 220°C.

Die Umsetzung von Verbindung (A) mit Reagenz (B) und Reagenz (C) kann man in einem Schritt durchführen. Sie kann jedoch auch in zwei Schritten erfolgen, so kann man beispielsweise Verbindung (A) zunächst mit Reagenz (B) umsetzen und dadurch ein hyperverzweigtes Polycarbonat herstellen und danach mit Reagenz (C) funktionalisieren.

Bei der Umsetzung mit Reagenz (B) wird üblicherweise H-$X^1$ und H-$X^2$ abgespalten. Wenn es sich bei H-$X^1$ und/oder H-$X^2$ um Halogenwasserstoff, insbesondere um HCl handelt, so ist es bevorzugt, den oder die abgespaltenen Halogenwasserstoffe durch die Zugabe einer Base, beispielsweise in äquimolaren Mengen, bezogen auf abzuspaltenden Halogenwasserstoff, aus dem Reaktionsgemisch zu entfernen. Geeignete Basen sind beispielsweise Alkalimetallhydroxide oder organische Amine, insbesondere tertiäre Amine wie Triethylamin und Hünigbase (Diisopropylethylamin). Wenn es sich bei H-$X^1$ und H-$X^2$ um Alkohole handelt, so ist es bevorzugt, den oder die abgespaltenen Alkohole H-$X^1$ und H-$X^2$ abzudestillieren, vorzugsweise während der Umsetzung. Das Abdestillieren kann man bei Atmosphärendruck oder auch bei reduziertem Druck durchführen, beispielsweise bei 0,1 bis 950 mbar, insbesondere bei 100 bis 900 mbar. Bevorzugt destilliert man bei Atmosphärendruck ab.

Das Herstellverfahren der hyperverzweigten Polycarbonate, enthaltend stabilisierend wirkende Gruppen (b) kann in Gegenwart eines organischen Lösungsmittels durchgeführt werden, das vorzugsweise aprotisch ist. Beispiele sind Decan, Dodecan, oder Solventnaphtha, weiterhin aromatische Kohlenwasserstoffe wie Toluol, Ethylbenzol, ein oder mehrere isomere Xylole oder chlorierte aromatische Kohlenwasserstoffe wie Chlorbenzol. Geeignet sind weiterhin Ether mit einem hinreichend hohen Siedepunkt, beispielsweise Di-n-Butylether oder 1,4-Dioxan. Weiterhin geeignet sind N,N-Dimethylformamid und N,N-Dimethylacetamid. Bevorzugt ist es jedoch, die Herstellung der hyperverzweigten Polycarbonate, enthaltend stabilisierend wirkende Gruppen (b) ohne die Verwendung von Lösungsmitteln durchzuführen.

Das Herstellverfahren der hyperverzweigten Polycarbonate, enthaltend stabilisierend wirkende Gruppen (b) kann in Gegenwart eines Katalysators oder eines Katalysatorgemisches durchgeführt werden. Geeignete Katalysatoren sind Verbindungen, die Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, oder organische Amine, insbesondere tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Natriumhydroxid, Natriumcarbonat, Natriumhydrogencarbonat, 1,4-Di-aza-[2,2,2]-bicyclooctan (DABCO), Diazabicyclononen (DBN), Diazabicycloundecen (DBU), Imidazole wie Imidazol, 1-Methylimidazol oder 1,2-Dimethylimidazol, Titantetra-n-butylat, Titantetraisopropylat, Dibutylzinnoxid, Dibutylzinn-dilaurat, Zinndioctoat, Zirkonacetylacetonat oder Gemische davon eingesetzt.

Man gibt im Allgemeinen in einer Menge von 50 bis 10.000, bevorzugt von 100 bis 5000 Gew.-ppm, Katalysator bzw. Katalysatorgemisch zu, bezogen auf die Menge an eingesetzter Verbindung (A) bzw. der Summe aus (A) und (D).

Im Allgemeinen erfolgt die Herstellung der hyperverzweigten Polycarbonate, enthaltend stabilisierend wirkende Gruppen (b) in einem Druckbereich von 0,1 mbar bis 20 bar, bevorzugt bei 1 mbar bis 5 bar.

Beispielsweise führt man das Herstellverfahren in Reaktoren oder Reaktorkaskaden durch, die im Batchbetrieb, halbkontinuierlich oder kontinuierlich betrieben werden, beispielsweise in einem oder mehreren Kesseln.

Zur Herstellung von hyperverzweigtem Polycarbonat kann man einsetzen:

Von 10 bis 59 mol-% Verbindung (A), bevorzugt von 10 bis 55 und besonders bevorzugt bis 49 mol-% Verbindung (A), von 40 bis 60 mol-% Reagenz (B), bevorzugt von 45 bis 55 mol-% und besonders bevorzugt etwa 50 mol-% Reagenz (B)
von 1 bis 50 mol-% Reagenz (C), bevorzugt bis 45 und besonders bevorzugt bis 40 mol-% Reagenz (C),

jeweils bezogen auf die gesamte Reaktionsmischung aus (A), (B) und (C).

Im Regelfalle beträgt die Menge des oder der eingesetzten Verbindung (D) von 0 bis 50 mol-% bezüglich der Verbindung (A), bevorzugt von 0 bis 45 mol-%, besonders bevorzugt bis 40 mol-% und ganz besonders bevorzugt von 0 bis 30 mol-%.

Durch die vorgenannte Einstellung der Reaktionsbedingungen und gegebenenfalls durch die Wahl des geeigneten Lösemittels können als Rohprodukt anfallende hyperverzweigte Polycarbonate, enthaltend stabilisierend wirkende Gruppen (b) nach der Herstellung ohne weitere Reinigung weiterverarbeitet werden.

Weiterhin kann das als Rohprodukt anfallende hyperverzweigte erfindungsgemäße Polycarbonat gestrippt, das heißt, von niedermolekularen, flüchtigen Verbindungen befreit werden. Dazu kann nach Erreichen des gewünschten Umsatzgrades der Katalysator optional deaktiviert und die niedermolekularen flüchtigen Bestandteile, z.B. Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

Zum Abbruch der intermolekularen Polykondensationsreaktion des Herstellverfahrens der hyperverzweigten Polycarbonate, enthaltend stabilisierend wirkende Gruppen (b) gibt es verschiedene Möglichkeiten. Beispielsweise kann man die Temperatur auf einen Bereich absenken, in dem die Reaktion zum Stillstand kommt und das hyperverzweigte Polycarbonat lagerstabil ist. In einer anderen Ausführungsform kann man den Katalysator bzw. das Katalysatorgemisch desaktivieren, bei basischen Katalysatoren zum Beispiel durch Zugabe einer sauren Komponente, zum Beispiel einer Lewis-Säure oder einer organischen oder anorganischen Protonensäure.

Weiterhin kann der Abbruch automatisch erfolgen, wenn eine hinreichende Anzahl an terminalen funktionellen Gruppen durch Reaktion mit Reagenz (C) nicht mehr zu einer weiteren Reaktion zur Verfügung steht.

Weiterhin kann man, sobald ein hyperverzweigtes Polycarbonat mit gewünschten Polykondensationsgrad vorliegt, zum Abbruch der Reaktion ein Produkt mit solchen Gruppen zusetzen, die gegenüber hyperverzweigtem Polycarbonat, enthaltend stabilisierend wirkende Gruppen (b) reaktiv sind. So kann man zum Beispiel ein Mono-, Di- oder Polyamin zugeben oder beispielsweise ein Mono-, Di- oder Polyisocyanat, eine Epoxydgruppen enthaltende Verbindung oder ein mit OH-Gruppen reaktives Säurederivat.

Besonders bevorzugt als Komponente (b) der erfindungsgemäßen Mischungen sind diejenigen hyperverzweigten Carbonate, enthaltend stabilisierend wirkende Gruppen, bei denen möglichst viele, insbesondere alle, Substituenten, Symbole und Indizes ihre bevorzugte bzw. besonders bevorzugte Bedeutung annehmen.

In einer weiteren bevorzugten Ausführungsform der erfindungsgemäßen Mischung enthält das verzweigte Polymer Urethan-, Allophanat-, Harnstoff-, Biuret-, Uretdion-, Amid-, Isocyanurat-, Carbodiimid-, Uretonimin-, Oxadiazintrion- oder Iminooxadiazindion-Gruppen und wird im Rahmen der vorliegenden Erfindung als verzweigtes Polyisocynat bezeichnet. Bevorzugt sind Urethan-, Allophanat-, Harnstoff- und/oder Biurethgruppen enthalten.

Di- und Polyisocyanate enthalten im Mittel 2 bis 10, vorzugsweise 2,1 bis 10, besonders bevorzugt 2,2 bis 8, Isocyanatgruppen pro Molekül. Mehrwertige Isocyanate sind Di- oder Polyisocyanate oder deren Mischungen.

Als Di- und Polyisocyanate kommen die aus dem Stand der Technik bekannten aliphatischen, cycloaliphatischen und aromatischen Isocyanate oder deren Mischungen in Frage. Bevorzugte Di- oder Polyisocyanate sind 4,4'-Diphenylmethandiisocyanat, 2,4'-Diphenylmethandiisocyanat, die Mischungen aus monomeren Diphenylmethandiisocyanaten und oligmeren Diphenylmethandüsocyanaten (Polymer-MDI), 2,4-Toluylendiisocyanat, 2,6-Totuylendiisocyanat, 1,5- und 2,6-Naphthylendiisocyanat, 1,3- und 1,4-Phenylendiisocyanat, Diphenyldiisocyanat, Toluidindiisocyanat, Triisocyanatotoluol, Tetramethylendiisocyanat, Hexamethylendiisocyanat, Isophorondiisocyanat, 2,4'- oder 4,4'-Methylenbis(cyclohexyl)diisocyanat, o-, m- oder p-Xylylendiisocyanat, Tetramethylxylylendiisocyanat, Dodecyldiisocyanat, Lysinalkylesterdiisocyanat, wobei Alkyl für $C_1$-Alkyl bis $C_{10}$-Alkyl steht, 2,2,4- oder 2,4,4-Trimethyl-1,6-hexamethylendiisocyanat, 1,4-Diisocyanatocyclohexan, 4-Isocyanatomethyl-1,8-octamethylendiisocyanat, 2-Butyl-2-ethylpentamethylendiisocyanat, 2-Isocyanatopropylcyclohexylisocyanat, 3(4)-Isocyanatomethyl-1-methylcyclohexylisocyanat, 1,3- oder 1,4-Bis(isocyanatomethyl)cyclohexan, 1,4-Diisocyanato-4-methylpentan und 4-Methylcyclohexan-1,3-diisocyanat (H-TDI).

Vorzugsweise werden Gemische aus zwei oder mehr der vorstehend genannten Polyisocyanate eingesetzt.

Geeignete verzweigte Polyisocyanate sind Verbindungen, die sich aus den oben genannten Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Diese Verknüpfungsmechanismen sind z.B. beschrieben in Becker und Braun, Kunststoff-Handbuch Nr. 7, Polyurethane, Carl-Hanser-Verlag München 1993. Bevorzugt werden Polyisocyanate verwendet, die Urethan-, Allophanat-, Harnstoff-, Biuret-, Isocyanurat-, Uretonimin-, Oxadiazintrion- oder Iminoxadiazindion-Strukturen enthalten.

Es können auch Gemische der vorgenannten verzweigten Polyisocyanate als Grundlage für die Komponente (b) der erfindungsgemäßen Mischung eingesetzt werden.

Die Verknüpfung der Di- oder Polyisocyanate über Urethangruppen erfolgt beispielsweise unter Verwendung von Alkoholen oder Alkoholmischungen mit einer Funktionalität von 2 oder mehr. Beispielhaft sei die Umsetzung von 3

Mol Hexamethylendiisocyanat, Isophorondiisocyanat, Toluylendiisocyanat oder Diphenylmethylendiisocyanat mit ≤ 1 Mol Triol, zum Beispiel Glycerin oder Trimethylolpropan, oder aber die Umsetzung von zwei Mol eines oligmeren Diphenylmethandiisocyanats (Polymer-MDI) mit ≤ 1 Mol Diol, zum Beispiel Ethylenglykol, Butandiol, Hexandiol oder einem Polyoxyalkylendiol, genannt. Bei diesen Reaktionen werden verzweigte Polyisocyanate mit einer Funktionalität größer 2 gebildet. Siehe dazu auch Becker und Braun, Kunststoff-Handbuch Nr. 7, Polyurethane, Carl-Hanser-Verlag München 1993, Seite 91.

Allophanatgruppen enthaltende Polyisocyanate werden aus Urethangruppen enthaltenden Polyisocyanaten erzeugt, indem die Urethangruppen mit weiteren Isocyanatgruppen umgesetzt werden. Siehe dazu auch Becker und Braun, Kunststoff-Handbuch Nr. 7, Polyurethane, Carl-Hanser-Verlag München 1993, Seite 94. Ein weiterer Weg der Herstellung ist die Reaktion von Oxadiazintrionen mit Alkoholen gemäß der EP 825211. Beispielhaft für die Herstellung eines Allophanats sei die Umsetzung von Hexamethylendiisocyanat oder Isophorondiisocyanat mit Monoalkoholen genannt, die gemäß GB 994 890, EP 496 208, EP 524 500 oder EP 524 501 zu Oligoisocyanaten mit einer Funktionalität größer 2 führen. Ebenso genannt sei die Umsetzung von Hexamethylendiisocyanat oder Isophorondiisocyanat mit Dioder höherwertigen Alkoholen, wie beschrieben z. B. in der EP 1 122 273. Bei diesen Reaktionen werden verzweigte Polyisocyanate mit einer Funktionalität größer 2 gebildet.

Harnstoff- und Biuretgruppen enthaltende Polyisocyanate können zum Beispiel durch Reaktionen von Isocyanaten mit Wasser oder mit Aminen hergestellt werden. Siehe dazu auch Becker und Braun, Kunststoff-Handbuch Nr. 7, Polyurethane, Carl-Hanser-Verlag München 1993, Seite 95. Beispielhaft sei die Reaktion von Hexamethylendiisocyanat oder Isophorondiisocyanat mit Wasser oder Wasser generierenden Substanzen genannt, wie sie nach DE-A 28 08 801, DE-A 34 03 277 oder DE-A 15 43 178 beschrieben werden. Bei diesen Reaktionen werden verzweigte Polyisocyanate mit einer Funktionalität größer 2 gebildet.

Isocyanuratstrukturen enthaltende Polyisocyanate werden erhalten, indem drei Isocyanatgruppen katalytisch oder thermisch cyclisiert werden. Bei Einsatz von Di- oder Polyisocyanaten als Ausgangsverbindungen entstehen in der Regel neben den eigentlichen Trimeren auch höheroligomere Polyisocyanate. Die summarische Funktionalität dieser Polyisocyanate ist damit größer als 3. Siehe dazu auch Becker und Braun, Kunststoff-Handbuch Nr. 7, Polyurethane, Carl-Hanser-Verlag München 1993, Seite 91. Beispielhaft sei die Herstellung von verzweigten Polyisocyanaten durch Isocyanuratisierung von Hexamethylendiisocyanat oder Isophorondiisocyanat genannt, wie sie gemäß DE-A 29 16 201 oder DE-A 38 10 908 durchgeführt werden kann.

Uretonimingruppen enthaltende Polyisocyanate werden erhalten, indem Carbodiimidgruppen enthaltende Polyisocyanate weiter mit Isocyanatgruppen umgesetzt werden. Siehe dazu auch Becker und Braun, Kunststoff-Handbuch Nr. 7, Polyurethane, Carl-Hanser-Verlag München 1993, Seite 94.

Oxadiazintriongruppen enthaltende Polyisocyanate werden erhalten durch Umsetzung von Di- oder Polyisocyanaten mit Kohlendioxid, wie zum Beispiel beschrieben in der DE-A 16 70 666.

Iminooxadiazindiongruppen enthaltende Polyisocyanate sind als asymmetrische Verwandte der Isocyanuratgruppen enthaltenden Polyisocyanate anzusehen. Die Herstellung dieser Verbindungen wird zum Beispiel in der DE-A 197 34 048 beschrieben.

Bevorzugt werden aliphatische oder cycloaliphatische Di- oder Polyisocyanate verwendet, die Isocyanurat-, Urethan-, Allophanat,-, Harnstoff- oder Biuretgruppen enthalten.

Die in den erfindungsgemäßen Mischungen enthaltenen verzweigten Polyisocyanate enthalten eine oder mehrere stabilisierend wirkende Gruppen, wobei den stabilisierend wirkende Gruppen entsprechende stabilisierte Additive über funktionelle Gruppen, die mit den NCO-Gruppen der Polyisocyanate chemisch unter Ausbildung einer kovalenten Bindung reagieren können, an die Polyisocyanate angekoppelt sind.

Ein Klasse von stabilisierend wirkenden Gruppen, die als Antioxidantien wirken, sind sterisch gehinderte Phenolgruppen. Entsprechende sterisch gehinderte Phenolgruppen sind bereits vorstehend für den Fall der hyperverzweigten Polycarbonate beschrieben und werden auch für den Fall der verzweigten Polyisocyanate eingesetzt. Die im Fall der hyperverzweigten Polycarbonate bevorzugten sterisch gehinderten Phenolgruppen sind auch im Fall der verzweigten Polyisocyanate bevorzugt.

Eine weitere Gruppe von stabilisierend von stabilisierend wirkenden Gruppen, die als Lichtstabilisatoren fungieren, basieren auf HALS-Verbindungen. Entsprechende HALS-Gruppen oder HALS-Verbindungen sind bereits vorstehend für den Fall der hyperverzweigten Polycarbonate beschrieben und werden auch für den Fall der verzweigten Polyisocyanate eingesetzt. Die im Fall der hyperverzweigten Polycarbonate bevorzugten HALS-Gruppen oder HALS-Verbindungen sind auch im Fall der verzweigten Polyisocyanate bevorzugt.

Eine weitere Gruppe von stabilisierend von stabilisierend wirkenden Gruppen sind aromatische Amingruppen. Entsprechende aromatische Amingruppen sind bereits vorstehend für den Fall der hyperverzweigten Polycarbonate beschrieben und werden auch für den Fall der verzweigten Polyisocyanate eingesetzt. Die im Fall der hyperverzweigten Polycarbonate bevorzugten aromatischen Amingruppen sind auch im Fall der verzweigten Polyisocyanate bevorzugt.

In einer weiteren Ausführungsform der erfindungsgemäßen Mischung, enthalten die verzweigten Polyisocyanate zwei unterschiedlichen stabilisierend wirkenden Gruppen, wobei eine dieser Gruppen auf sterisch gehinderten

Phenolen und die andere auf HALS-Verbindungen basiert.

Die Herstellung der verzweigten Polyisocyanate, enthaltend stabilisierend wirkende Gruppen, erfolgt üblicherweise über eine Polyadditionsreaktion dergestalt, dass wenigstens ein verzweigtes Polyisocyanat als Ankergruppe, gegebenenfalls unter Mitverwendung eines organischen Lösungsmittels, unter Inertgasatmosphäre, vorzugsweise unter Stickstoff, in einem Reaktionsgefäß vorgelegt und unter Rühren auf Reaktionstemperatur gebracht wird. Anschließend gibt man bei Reaktionstemperatur wenigstens eine stabilisierend wirkende Gruppe kontinuierlich oder diskontinuierlich zu. Die Menge an stabilisierend wirkender Gruppe ist abhängig von der Anzahl der NCO-Gruppen des verzweigten Polyisocyanats und wird vorzugsweise so gewählt, dass das Verhältnis der Molzahl Isocyanatgruppen zur Molzahl, der mit diesen reaktiven Gruppen des Wirkstoffes im wesentlichen 1:1 beträgt. Werden mehrere Wirkstoffe gleichzeitig oder nacheinander mit dem Polyisocyant umgesetzt, so wird die Gesamtmenge der reaktiven Gruppen der Wirkstoffe so bemessen, so dass sie im Wesentlichen der Gesamtmenge der Isocyanatgruppen entspricht. Die so hergestellten verzweigten Polyisocyanate, enthaltend stabilisierend wirkende Gruppen, können aber noch bis zu 20 mol%, vorzugsweise bis zu 10 mol% freie NCO-Gruppen aufweisen, d. h. NCO-Gruppen, die nicht mit der stabilisierend wirkenden Gruppe abreagiert haben. Vorzugsweise weisen die erfindungsgemäßen Stabilisatoren jedoch im Wesentlichen keine freien NCO-Gruppen auf.

Die Reaktionszeit wird in der Regel so gewählt, dass die NCO-Gruppen der verzweigten Polyisocyanate vollständig mit den reaktiven Gruppen der stabilisierend wirkenden Gruppe umgesetzt werden. Die vorgenannte Umsetzung mit den stabilisierend wirkende Gruppen und den Hilfsstoffen kann gegebenenfalls in Anwesenheit von Katalysatoren erfolgen, die in Mengen von 0,0001 bis 1 Gew.-%, insbesondere von 0,001 bis 0,1 Gew.-%, jeweils bezogen auf die Menge der verzweigten Polyisocyanate, eingesetzt werden. Als Katalysatoren für Polyadditionsreaktionen kommen metallorganische Verbindungen, speziell Zinn-, Zink-, Titan-, Wismut oder Zirkon-organische Verbindungen in Betracht. Besonders bevorzugt werden zum Beispiel Dibutylzinndilaurat, Dibutylzinnoxid, Titantetrabutylat, Zinkacetylacetonat oder Zirkonacetylacetonat eingesetzt. Weiterhin können starke Basen, vorzugsweise stickstoffhaltige Verbindungen, wie Tributylamin, Chinnuclidin, Diazabicyclooctan, Diazabicyclononan, Diazabicyclononen, Diazabicycloundecan oder Diazabicycloundecen eingesetzt werden.

Als geeignete Lösungsmittel können solche verwendet werden, die unter Reaktionsbedingungen gegenüber den Einsatzstoffen inert sind. Geeignet sind zum Beispiel Aceton, 2-Butanon, Essigsäureethylester, Essigsäurebutylester, Tetrahydrofuran, Dioxan, Benzol, Toluol, Xylol, Ethylbenzol, Chlorbenzol, Dichlorbenzol, Dimethylformamid, Dimethylacetamid oder N-Methylpyrrolidon.

Die Reaktionstemperatur für die Polyadditionsreaktion beträgt üblicherweise -10 bis 220°C, bevorzugt 0 bis 180°C. Die Reaktion erfolgt sowohl bei Atmosphärendruck als auch bei einem Druck oberhalb oder auch unterhalb des Atmosphärendrucks, beispielsweise bei einem Druck von 2 bis 20 bar oder bei 0,1 bis 0,001 bar.

In einer Ausführungsform der vorliegenden Erfindung enthalten erfindungsgemäße Mischungen verzweigte Polyisocyanate mit stabilisierend wirkenden Gruppen, die dadurch gekennzeichnet sind, dass diese Polyisocyanate eine dynamische Viskosität im Bereich von 100 bis 150.000 mPa·s, bevorzugt bis 10.000 mPa·s aufweisen, bestimmt bei 40°C, beispielsweise analog DIN 53019.

In einer Ausführungsform der vorliegenden Erfindung enthalten erfindungsgemäße Mischungen verzweigte Polyisocyanate mit stabilisierend wirkenden Gruppen, die dadurch gekennzeichnet sind, dass diese Polyisocyanate ein Zahlenmittel des Molekulargewichtes ($M_n$) von 100 bis 15.000, vorzugsweise von 200 bis 12.000 und insbesondere von 400 bis 10.000 g/mol, bestimmbar beispielsweise mit GPC, Polymethylmethacrylat (PMMA) als Standard und Tetrahydrofuran als Laufmittel aufweisen

In einer bevorzugten Ausführungsform der vorliegenden Erfindung enthalten erfindungsgemäße Mischungen verzweigte Polyisocyanate mit stabilisierend wirkenden Gruppen, die dadurch gekennzeichnet sind, dass diese Polyisocyanate eine dynamische Viskosität im Bereich von 100 bis 150.000 mPa·s, bevorzugt bis 10.000 mPa·s aufweisen, bestimmt bei 40°C, beispielsweise analog DIN 53019 und dass diese Polyisocyanate ein Zahlenmittel des Molekulargewichtes ($M_n$) von 100 bis 15.000, vorzugsweise von 200 bis 12.000 und insbesondere von 400 bis 10.000 g/mol, bestimmbar beispielsweise mit GPC, Polymethylmethacrylat (PMMA) als Standard und Tetrahydrofuran als Laufmittel aufweisen

In einer Ausführungsform der erfindungsgemäßen Mischung, wird als verzweigtes Polymer, enthaltend stabilsierend wirkende Gruppen, das Polymere eingesetzt, das erhalten wird durch die Umsetzung einer Mischung enthaltend:

(A') ein oder mehrere mehrwertige Isocyanate
(B') ein oder mehrere HALS-Verbindungen, die eine funktionelle Gruppe enthalten, die mit (A') reagieren,
(C')inertes Lösungsmittel oder Mischungen inerter Lösungsmittel,
(D')optional Katalysator.

Bevorzugt weist hierbei das Isocyanat (A') eine Funktionalität größer als 2 auf und besonders bevorzugt ist das Isocyanat (A') ein oligomers Isocyanat auf Basis von Hexamethylendiisocyanat oder Isophorondüsocyanat.

Weiterhin bevorzugt sind die HALS-Verbindug (B') eine Verbindung der oben beschriebenen allgemeinen Formel (III) wobei $R^{21}$ mit dem mehrwertigen Isocyanat (A') oder den NCO-Gruppen des verzweigten Polyisocyanats reagiert.

Ganz besonders bevorzugt ist $R^{21}$ = OH, $R^{22} = R^{23} = R^{24} = R^{25} = R^{26}$ = Methyl und $R^{27} = R^{28}$ = H.

Bevorzugt ist das inerte Lösungsmittel (C') Aceton, 2-Butanon, Tetrahydrofuran, Essigsäureethylester oder Essigsäurebutylester.

Der optionale Katalysator (D') ist bevorzugt Dibutylzinndilaurat, Dibutylzinnoxid oder Titan-tetrabutylat ist.

Weiterhin kann in den erfindungsgemäßen Mischungen Komponente (c) optional einen oder mehrere Zusatzstoffe umfassen.

Optionale weitere Zusatzstoffe (c)
Wahlweise enthält die erfindungsgemäße Mischung als Komponente (c) oder das durch die Mischung zu stabilisierende unbelebte organische Material zusätzlich wenigstens einen weiteren Lichtstabilisator und/oder weitere (Co)stabilisatoren. Geeignete Lichtstabilisatoren und weitere (Co)stabilisatoren sind beispielsweise aus den Gruppen a) bis s) ausgewählt:

a) 4,4-Diarylbutadiene,
b) Zimtsäureester,
c) Benzotriazole,
d) Hydroxybenzophenone,
e) Diphenylcyanacrylate,
f) Oxamide,
g) 2-Phenyl-1,3,5-triazine,
h) Antioxidantien,
i) Nickelverbindungen,
j) sterisch gehinderte Amine, die nicht als stabilisierende Gruppen an verzweigtes Polymer gebunden sind, ,
k) Metalldesaktivatoren,
l) Phosphite und Phosphonite,
m) Hydroxylamine,
n) Nitrone,
o) Aminoxide,
p) Benzofuranone und Indolinone,
q) Thiosynergisten,
r) Peroxid-zerstörende Verbindungen und
s) basische Costabilisatoren.

Zur Gruppe a) der 4,4-Diarylbutadiene zählen beispielsweise Verbindungen der Formel (aa)

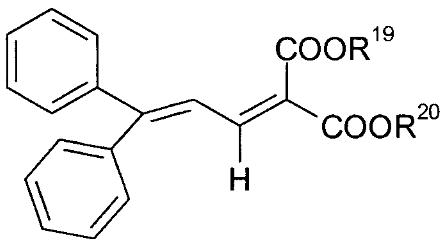

(aa)

Die Verbindungen sind aus der EP-A-916 335 bekannt. Die Substituenten $R^{19}$ und $R^{20}$ bedeuten, unabhängig voneinander, gleich oder verschieden, bevorzugt $C_1$-$C_8$-Alkyl und $C_5$-$C_8$-Cycloalkyl.

Zur Gruppe b) der Zimtsäureester zählen beispielsweise 4-Methoxyzimtsäure-2-isoamylester, 4-Methoxyzimtsäure-2-ethylhexylester, Methyl-α-methoxycarbonylcinnamat, Methyl-α-cyano-β-methyl-β-methoxycinnamat, Butyl-α-cyano-β-methyl-p-methoxy-cinnamat und Methyl-α-methoxycarbonyl-p-methoxycinnamat.

Zur Gruppe c) der Benzotriazole zählen beispielsweise 2-(2'-Hydroxyphenyl)-benzotriazole wie 2-(2'-Hydroxy-5'-methylphenyl)-benzotriazol, 2-(3',5'-Di-tert-butyl-2'-hydroxyphenyl)benzotriazol, 2-(5'-tert-Butyl-2'-hydroxyphenyl)-benzotriazol, 2-(2'-Hydroxy-5'-(1,1,3,3-tetramethylbutyl)phenyl)benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octyloxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl) phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol und 2-(3'-tert-Butyl-2'-hydroxy-5'-(2-isooctyloxy-carbonylethyl)-phenylbenzotriazol, 2,2'-Methylen-bis[4-(1,1,3,3-tetramethylbutyl)-6-benzotriazol-2-yl-phenol]; das Produkt der Veresterung von 2-[3'-tert-Butyl-5'-(2-methoxycarbonylethyl)-2'-hydroxyphenyl]-2H-benzotriazol mit Polyethylenglycol 300; [R-CH2CH2-COO(CH2)3]2, mit R = 3'-tert-Butyl-4'-hydroxy-5'-2H-benzotriazol-2-yl-phenyl und Gemische davon.

Zur Gruppe d) der Hydroxybenzophenone zählen beispielsweise 2-Hydroxybenzophenone wie 2-Hydroxy-4-methoxybenzophenon, 2,2'-Dihydroxy-4-methoxybenzophenon, 2,4-Dihydroxybenzophenon, 2,2',4,4'-Tetrahydroxybenzophenon, 2,2'-Dihydroxy-4,4'-dimethoxybenzophenon, 2,2'-Dihydroxy-4,4'-dimethoxybenzophenon, 2-Hydroxy-4-(2-ethylhexyloxy)benzophenon, 2-Hydroxy-4-(n-octyloxy)benzophenon, 2-Hydroxy-4-methoxy-4'-methylbenzophenon, 2-Hydroxy-3-carboxybenzophenon, 2-Hydroxy-4-methoxybenzophenon-5-sulfonsäure und deren Natriumsalz, 2,2'-Dihydroxy-4,4'-dimethoxybenzophenon-5,5'-bissulfonsäure und deren Natriumsalz.

Zur Gruppe e) der Diphenylcyanacrylate zählen beispielsweise Ethyl-2-cyan-3,3-diphenylacrylat, das beispielsweise im Handel unter dem Namen Uvinul® 3035 der Fa. BASF AG, Ludwigshafen erhältlich ist, 2-Ethylhexyl-2-cyan-3,3-diphenylacrylat, das beispielsweise im Handel als Uvinul® 3039 der Fa. BASF AG, Ludwigshafen, erhältlich ist und 1,3-Bis-[(2'-cyano-3',3'-diphenylacryloyl)oxy]-2,2-bis{[2'-cyano-3',3'-diphenyl-acryloyl)oxy]methyl}propan, das beispielsweise im Handel unter dem Namen Uvinul® 3030 der Fa. BASF AG, Ludwigshafen erhältlich ist.

Zur Gruppe f) der Oxamide zählen beispielsweise 4,4'-Dioctyloxyoxanilid, 2,2'-Diethoxyoxanilid, 2,2'-Dioctyloxy-5,5'-di-tert-butoxanilid, 2,2'-Didodecyloxy-5,5'-di-tert-butoxanilid, 2-Ethoxy-2'-ethyloxanilid, N,N'-Bis(3-dimethylaminopropyl)oxamid, 2-Ethoxy-5-tert-butyl-2'-ethoxanilid und dessen Mischung mit 2-Ethoxy-2'-ethyl-5,4'-di-tert-butoxanilid sowie Mischungen von ortho-, para-Methoxy-disubstituierten Oxaniliden und Mischungen von ortho- und para-Ethoxy disubstituierten Oxaniliden.

Zur Gruppe g) der 2-Phenyl-1,3,5-triazine zählen beispielsweise 2-(2-Hydroxyphenyl)-1,3,5-triazine wie 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propoxy)-phenyl]-4,6-bis(2,4-dimethyl)-1,3,5-triazin, 2-[2-Hydroxy-4-(2-hydroxy-3-octyloxy-propoxy)phenyl]-4,6-bis(2,4-dimethyl)-1,3,5-triazin, 2-[4-(Dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis-(2,4-dimethylphenyl)-1,3,5-triazin, 2-(2-Hydroxy-4-hexyloxyphenyl)-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin und 2-(2-Hydroxyphenyl)-4-(4-methoxyphenyl)-6-phenyl-1,3,5-triazin.

Die Gruppe h) der Antioxidantien umfasst beispielsweise:

Alkylierte Monophenole wie beispielsweise 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(a-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, unverzweigte oder in der Seitenkette verzweigte Nonylphenole wie beispielsweise 2,6-Di-nonyl-4-methylphenol, 2,4-Dimethyl-6-(1-methylundec-1-yl)-phenol, 2,4-Dimethyl-6-(1-methylheptadec-1-yl)-phenol, 2,4-Dimethyl-6-(1-methyltridec-1-yl-)phenol und Gemische davon.

Alkylthiomethylphenole wie zum Beispiel 2,4-Dioctylthiomethyl-6-tert-butylphenol, 2,4-Dioctylthiomethyl-6-methylphenol, 2,4-Dioctylthiomethyl-6-ethylphenol, 2,6-Didodecylthiomethyl-4-nonylphenol.

Hydrochinone und alkylierte Hydrochinone wie zum Beispiel 2,6-Di-tert-butyl-4-methoxyphenol, 2,5-Di-tert-butylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butyl-4-hydroxyanisol, 3,5-Di-tert-butyl-4-hydroxyphenylstearat, Bis-(3,5-di-tert-butyl-4-hydroxyphenyl)adipat.

Tocopherole, wie zum Beispiel $\alpha$-Tocopherol, $\beta$-Tocopherol, $\gamma$-Tocopherol, $\delta$-Tocopherol und Gemische davon (Vitamin E).

Hydroxylierte Thiodiphenylether wie zum Beispiel 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis(6-tert-butyl-2-methylphenol), 4,4'-Thio-bis-(3,6-di-sec-amylphenol), 4,4'-Bis(2,6-dimethyl-4-hydroxyphenyl)disulfid.

Alkyliden-Bisphenole wie zum Beispiel 2,2'-Methylen-bis(6-tert-butyl-4-methylphenol), 2,2'-Methylen-bis(6-tert-butyl-4-ethylphenol), 2,2'-Methylen-bis[4-methyl-6-(a-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis (4,6-di-tert-butylphenol), 2,2'-Ethyliden-bis(6-tert-butyl-4-isobutylphenol), 2,2'-Methylen-bis[6-(a-methylbenzyl)-4-nonylphenol], 2,2'-Methylen-bis[6-(a,a-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-Bis(5-tert-butyl-4-hydroxy-2-methyl-phenyl)-3-n-dodecylmercaptobutan, Ethylenglycol-bis-[3,3-bis(3-tert-butyl-4-hydroxyphenyl)butyrat], Bis(3-tert-butyl-4-hydroxy-5-methyl-phenyl)dicyclopentadien, Bis[2-(3'-tert-butyl-2-hydroxy-5- methylbenzyl)-6-tert-butyl-4-methylphenyl]terephthalat, 1,1-Bis-(3, 5-dimethyl-2-hydroxyphenyl)butan, 2,2-Bis-(3,5-di-tert-butyl-4-hydroxyphenyl)propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.

Benzylverbindungen wie zum Beispiel 3,5,3',5'-Tetra-tert-butyl-4,4'-dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)amin, 1,3,5-Tri-(3,5-di-tert-butyl-4-hydroxybenzyl)-2,4,6-trimethylbenzol, Di-(3,5-Di-tert-butyl-4-hydroxybenzyl)sulfid, 3,5-Di-tert-butyl-4-hydroxybenzyl-mercapto-essigsäureisooctylester, Bis-(4-tert-butyl-3-hydroxy-2, 6-dimethylbenzyl)dithiolterephthalat, 1,3,5-Tris-(3,5-di-tert-butyl-4-hydroxybenzyl)isocyanurat, 1,3,5-Tris-(4-tert-butyl-3-hydroxy-2, 6-dimethylbenzyl)isocyanurat, 3,5-Di-tert-butyl-4-hydroxybenzyl-phosphorsäuredioctadecylester und 3,5-Di-tert-butyl-4-hydroxybenzyl-phosphorsäuremonoethylester, Calciumsalz.

Hydroxybenzylierte Malonate wie zum Beispiel Dioctadecyl-2,2-bis-(3,5-di-tert butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)malonat, Bis[4-(1,1,3,3-tetramethylbutyl)phenyl]-2,2-bis(3,5-di-tert-butyl-4-hydroxybenzyl)malonat.

Hydroxybenzyl-Aromaten wie zum Beispiel 1,3,5-Tris-(3, 5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl) phenol.

Triazinverbindungen wie zum Beispiel 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.

Benzylphosphonate wie zum Beispiel Dimethyl-2,5-di-tert-butyl-4-hydroxybenzylphosphonat, Diethyl-3,5-di-tert-butyl-4-hydroxybenzylphosphonat ((3,5-Bis(1,1-dimethylethyl)-4-hydroxyphenyl)methyl)Iphosphonsäurediethylester), Dioctadecyl-3,5-di-tert-butyl-4-hydroxybenzylphosphonat, Dioctadecyl-5-tert-butyl-4-hydroxy-3-methylbenzylphosphonat, Calciumsalz des 3,5-Di-tert-butyl-4-hydroxybenzylphosphonsäure-monoethylesters.

Acylaminophenole wie zum Beispiel 4-Hydroxy-laurinsäureanilid, 4-Hydroxystearinsäureanilid, 2,4-Bis-octylmercapto-6-(3,5-tert-butyl-4-hydroxyanilino)-s-triazin und Octyl-N-(3,5-di-tert-butyl-4-hydroxyphenyl)-carbamat.

Ester der β-(3,5-Di-tert-butyl-4-hydroxyphenyl)propionsäure mit ein- oder mehrwertigen Alkoholen wie z. B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N, N'-Bis-(Hydroxyethyl)oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

Ester der β-(5-tert-Butyl-4-hydroxy-3-methylphenyl)propionsäure mit ein- oder mehrwertigen Alkoholen, wie z. B. mit Methanol, Ethanol, n-Octanol, i-Octanoi, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2] octan.

Ester der β-(3,5-Dicyclohexyl-4-hydroxyphenyl)propionsäure mit ein- oder mehrwertigen Alkoholen wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo [2.2.2]octan.

Ester der 3,5-Di-tert-butyl-4-hydroxyphenylessigsäure mit ein- oder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexanediol, Trimethylolpropan, 4-Hydroxymethyl-1-phospha-2,6,7-trioxabicyclo[2.2.2]octan.

Amide der β-(3, 5-Di-tert-butyl-4-hydroxyphenyl)propionsäure, wie z. B. N,N'-Bis(3,5-di-tert-butyl-4-hydroxyphenylpropionyl)-hexamethylendiamid, N,N'-Bis(3,5-di-tert-butyl-4-hydroxyphenylpropionyl)-trimethylendiamid, N,N'-Bis(3,5-di-tert-butyl-4-hydroxyphenylpropionyl)-hydrazid, N,N'-Bis[2-(3-[3,5-di-tert-butyl-4-hydroxyphenyl]-propionyloxy)ethyl]-oxamid (z. B. Naugard®XL-1 der Firma Uniroyal).

Ascorbinsäure (Vitamin C)

Aminische Antioxidantien, wie zum Beispiel N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N, N'-Dicyclohexyl-p-phenylendiamin, N, N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, zum Beispiel p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylaminophenol, Bis-(4-methoxyphenyl)amin, 2,6-Di-tert-butyl-4-dimethylaminomethylphenol, 2,4'-Diaminodiphenylmethan, 4,4'-Diaminodiphenylmethan, N,N,N',N'-Tetramethyl-4,4'-diaminodiphenylmethan, 1,2-Bis-[(2-methylphenyl)amino]ethan,1,2-Bis(phenylamino)-propan, (o-Tolyl)-biguanid, Bis[4-(1',3'-dimethylbutyl)phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyldiphenylaminen, Gemisch aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, 2,2,6,6-Tetramethylpiperidin-4-on, 2,2,6,6 Tetramethylpiperidin-4-ol, das Dimethylsuccinat-Polymer mit 4-Hydroxy-2,2,6,6-tetramethyl-1-piperidinethanol [CAS Nummer 65447-77-0], (beispielsweise Tinuvin® 622 der Fa. Ciba Specialty Chemicals, Inc.), Polymer of 2,2,4,4-Tetramethyl-7-oxa-3,20-diaza-dispiro[5.1.11.2]-heeicosan-21-on und Epichlorhydrin [CAS-No.: 202483-55-4], beispielsweise (Hostavin® N 30 der Fa. Clariant).

Zu Gruppe i) der Nickelverbindungen gehören zum Beispiel Nickel-Komplexe des 2,2'-Thio-bis-[4-(1,1,3,3-tetramethylbutyl)phenols], wie der 1:1 oder 1:2 Komplex, gegebenenfalls mit zusätzlichen Liganden wie n-Butylamin, Triethanolamin oder N-Cyclohexyldiethanolamin, Nickeldibutyldithiocarbamat, Nickelsalze von 4-Hydroxy-3,5-di-tert-butylbenzylphosphonsäuremonoalkylester wie z. B. der Methyl- oder Ethylester, Nickelkomplexe von Ketoximen wie z. B. von 2-Hydroxy-4-methylphenylundecylketoxim, Nickelkomplex von 1-Phenyl-4-lauroyl-5-hydroxypyrazol, gegebenenfalls mit zusätzlichen Liganden.

Zur Gruppe j) der sterisch gehinderten Amine gehören zum Beispiel 4-Hydroxy-2,2,6,6-tetramethylpiperidin, 1-Allyl-4-hydroxy-2,2,6,6-tetramethylpiperidin, 1-Benzyl-4-hydroxy-2,2,6,6-tetramethylpiperidin, Bis(2,2,6,6-tetramethyl-4-piperidyl)sebacat, Bis(2,2,6,6-tetramethyl-4-piperidyl)succinat, Bis(1,2,2,6,6-pentamethyl-4-piperidyl)sebacat, Bis(1-octyloxy-2, 2,6,6-tetramethyl-4-piperidyl)sebacat, Bis(1,2,2,6,6-pentamethyl-4-piperidyl)-n-butyl-3,5-di-tert-butyl-4-hydroxybenzylmalonat (n-Butyl-3,5-di-tert-butyl-4-hydroxy-benzyl-malonsäure-bis(1,2,2,6,6-pentamethylpiperidyl)-ester), Kondensationsprodukt aus 1-(2-Hydroxyethyl)-2,2,6,6-tetramethyl-4-hydroxypiperidin und Bernsteinsäure, lineare oder cyclische Kondensationsprodukte aus N,N'-Bis(2,2,6,6-tetramethyl-4-piperidyl)hexamethylendiamin und 4-tert-Octylamino-2,6-dichlor-1,3,5-triazin, Tris(2,2,6,6-tetramethyl-4-piperidyl)-nitrilotriacetat, Tetrakis(2,2,6,6-tetramethyl-4-piperidyl)-1,2,3,4-butan-tetracarboxylat, 1,1'-(1, 2-Ethandiyl)-bis(3,3,5,5-tetramethylpiperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert butylbenzyl)malonat, 3-n-Octyl-7,7,9,9-tetramethyl-1,3,8-triazaspiro [4.5]decan-2,4-dion, Bis-(1-octyloxy-2,2,6,6-tetramethylpiperidyl)-sebacat, Bis-(1-octyloxy-2,2,6,6-tetramethyl-piperidyl)-succinat, lineare oder cyclische Kondensationsprodukte von N,N'-Bis-(2,2,6,6-tetramethyl-4-piperidyl)hexamethylendiamin und 4-Morpholino-2,6-dichlor-1,3,5-triazin, Kondensationsprodukt von 2-Chlor-4,6-bis(4-n-butylamino-2, 2,6,6-tetramethylpiperidyl)-1,3,5-triazin und 1,2-Bis(3-aminopropylamino)ethan, Kondensationsprodukt von 2-Chlor-4,6-di-(4-n-butylamino-1,2,2,6,6-pentamethylpiperidyl)-1,3,5-triazin und 1,2-Bis-(3-aminopropylamino)ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)pyrrolidin-2,5-dion, Gemisch von 4-Hexadecyloxy-und 4-Stearyloxy-2,2,6,6-tetramethylpiperidin, Kondensationsprodukt aus N,N'-Bis(2,2,6,6-tetramethyl-4-piperidyl)hexamethylendiamin und 4-Cyclohexylamino-2,6-dichlor-1,3,5-triazin, Kondensationsprodukt aus 1,2-Bis(3-aminopropylamino)ethan und 2,4,6-Trichlor-1,3,5-triazin sowie 4-Butylamino-2,2,6,6-tetramethylpiperidin (CAS Reg. No. [136504-96-6]); N-(2,2,6,6-Tetramethyl-4-piperidyl)-n-dodecylsuccinimid, N-(1,2,2,6,6-Pentamethyl-4-piperidyl)-n-dodecylsuccinimid, 2-Undecyl-7,7,9,9-tetramethyl-1-oxa-3,8-diaza-4-oxospiro[4, 5]decan, Reaktionsprodukt von 7,7,9,9-Tetramethyl-2-cycloundecyl-1-oxa-3,8-diaza-4-oxospiro[4, 5]decan und Epichlorhydrin, 1,1-Bis(1,2,2,6,6-pentamethyl-4-piperidyloxycarbonyl)-2-(4-methoxyphenyl)ethen, Diester der 4-Methoxy-methylenmalonsäure mit 1,2,2,6,6-Pentamethyl-4-hydroxypiperidin, Poly[methylpropyl-3-oxo-4-(2,2,6,6-tetramethyl-4-piperidyl)]siloxan, 1-(2-Hydroxy-2-methylpropoxy)-4-octadecanoyloxy-2,2,6,6-tetramethylpiperidin, 1-(2-Hydroxy-2-methylpropoxy)-4-hexadecanoyloxy-2, 2,6,6-tetramethylpiperidin, das Reaktionsprodukt aus 1-Oxyl-4-hydroxy-2,2,6,6-tetramethylpiperidin und einem Kohlenstoffrest von t-Amylalkohol, 1-(2-Hydroxy-2-methylpropoxy)-4-hydroxy-2,2,6,6-tetramethylpiperidin, 1-(2-Hydroxy-2-methylpropoxy)-4oxo-2,2,6,6-tetramethylpiperidin, Bis(1-(2-hydroxy-2-methylpropoxy)-2,2,6,6-tetramethylpiperidin-4-yl)sebacat, Bis(1-(2-hydroxy-2-methylpropoxy)-2, 2,6,6-tetramethylpiperidin-4-yl)adipat, Bis(1-(2-hydroxy-2-methylpropoxy)-2, 2,6,6-tetramethylpiperidin-4-yl)succinat, Bis(1-(2-hydroxy-2-methylpropoxy)-2, 2,6,6-tetramethylpiperidin-4-yl)glutarat, 2,4-bis{N[1-(2-hydroxy-2-methylpropoxy)-2,2,6,6-tetramethylpiperidin-4-yl]-N-butylamino}-6-(2hydroxyethylamino)-s-triazin, Hexahydro-2,6-bis(2,2,6,6-tetramethyl-4-piperidyl)-1H,4H,5H,8H-2,3a,4a,6,7a,8a-hexaazacyclopenta[def]fluoren-4,8-dion (z. B. Uvinul® 4049 der Fa. BASF AG, Ludwigshafen), Poly[[6-[(1,1,3,3-tetramethylbutyl)amino]-1,3,5-triazin-2,4-diyl][(2,2,6,6-tetramethyl-4-piperidinyl)imino]1,6-hexandiyl[(2,2,6,6-tetramethyl-4-piperidinyl)imino]]) [CAS Nr. 71878-19-8], 1,3,5-Triazin-2,4,6-triamin,N,N'''-[1,2-ethandiyl-bis [[4,6-bis-[butyl(1,2,2,6,6-pentamethyl-4-piperidinyl)amino]-1,3,5-triazin-2-yl]imino]-3,1-propandiyl]]bis[N',N''-dibutyl-N',N''-bis(1,2,2,6,6-pentamethyl-4-piperidinyl)- (CAS Nr. 106990-43-6) (z. B. Chimassorb 119 der Fa. Ciba Specialty Chemicals, Inc.) .

Zur Gruppe k) der Metalldesaktivatoren gehören zum Beispiel N,N'-Diphenyloxalsäurediamid, N-Salicylal-N'-salicyloyl-hydrazin, N,N'-Bis(salicyloyl)hydrazin, N, N'-Bis(3,5-di-tert-butyl-4-hydroxyphenylpropionyl)hydrazin, 3-Salicyloylamino-1,2,4-triazol, Bis(benzyliden)-oxalyldihydrazid, Oxanilid, Isophthaloyldihydrazid, Sebacoylbisphenylhydrazid, N, N'-Diacetyladipinsäuredihydrazid, N,N'-Bis(salicyloyl)oxalsäuredihydrazid, N,N'-Bis(salicyloyl)thiopropionyldihydrazid.

Zur Gruppe l) der Phosphite und Phosphonite gehören zum Beispiel Triphenylphosphit, Diphenylalkylphosphite, Phenyldialkylphosphite, Tris(nonylphenyl)phosphit, Trilaurylphosphit, Trioctadecylphosphit, Distearylpentaerythritdiphosphit, Tris(2,4-di-tert-butylphenyl)phosphit, Diisodecylpentaerythritdiphosphit, Bis(2,4-di-tert-butylphenyl)pentaerythritdiphosphit, Bis(2,6-di-tert-butyl-4-methylphenyl)-pentaerythritdiphosphit, Düsodecyloxypentaerythritdiphosphit, Bis (2,4-di-tert-butyl-6-methylphenyl)-pentaerythritdiphosphit, Bis(2,4,6-tris(tert-butylphenyl)pentaerythrit-diphosphit, Tristearylsorbittriphosphit, Tetrakis-(2,4-di-tert-butylphenyl)-4,4'-biphenylendiphosphonit, 6-Isooctyloxy-2,4,8,10-tetra-tert-butyl-dibenz[d,f][1,3,2]di-oxaphosphepin, 6-Fluor-2,4,8,10-tetra-tert-butyl-12-methyl-dibenz[d,g][1,3,2]di-oxaphosphocin, Bis(2,4-di-tert-butyl-6-methylphenyl)methylphosphit, Bis(2,4-di-tert-butyl-6-methylphenyl)ethylphosphit, 2,2',2''-Nitrilo[triethyl-tris(3,3', 5,5'-tetra-tert-butyl-1,1'-biphenyl-2,2'-diyl)phosphit], 2- Ethylhexyl-(3,3', 5,5'-tetra-tert-butyl-1,1'-biphenyl-2,2'-diyl)phosphit.

Zur Gruppe m) der Hydroxylamine gehören zum Beispiel N, N-Dibenzylhydroxylamin, N, N-Diethylhydroxylamin, N,N-Dioctylhydroxylamin, N,N-Dilaurylhydroxylamin, N,N-Ditetradecylhydroxylamin, N,N-Dihexadecylhydroxylamin, N, N-Dioctadecyl-hydroxylamin, N-Hexadecyl-N-octadecylhydroxylamin, N-Heptadecyl-N-octadecylhydroxylamin, N-Methyl-N-octadecylhydroxylamin und N, N-Dialkylhydroxylamin aus hydrierten Talgfettaminen.

Zur Gruppe n) der Nitrone gehören zum Beispiel N-Benzyl-$\alpha$-phenylnitron, N-Ethyl-$\alpha$-methylnitron, N-Octyl-$\alpha$-heptylnitron, N-Lauryl-$\alpha$-undecylnitron, N-Tetradecyl-$\alpha$-tridecylnitron, N-Hexadecyl-$\alpha$-pentadecylnitron, N-Octadecyl-$\alpha$-heptadecylnitron, N-Hexadecyl-$\alpha$-heptadecylnitron, N-Ocatadecyl-$\alpha$-pentadecylnitron, N-Heptadecyl-$\alpha$-heptadecylnitron, N-Octadecyl-$\alpha$-hexadecylnitron, N-Methyl-$\alpha$-heptadecylnitron und Nitrone, abgeleitet von N,N-Dialkylhydroxylaminen hergestellt aus hydrierten Talkfettaminen.

Zur Gruppe o) der Aminoxide gehören zum Beispiel Aminoxidderivate wie sie in den U.S. Patenten Nr. 5,844,029 und 5,880,191 beschrieben sind, Didecylmethylaminoxid, Tridecylaminoxid, Tridodecylaminoxid und Trihexadecylaminoxid.

Zur Gruppe p) der Benzofuranone und Indolinone gehören zum Beispiel die in den US-Patenten 4,325,863; 4,338,244; 5,175,312; 5,216,052; 5,252,643; in der DE-A-4316611; in der DE-A-4316622; in der DE-A-4316876; in der EP-A-0589839 oder EP-A-0591102 beschriebenen oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]benzofuran-2-on, 3,3'-Bis[5,7-di-tert-butyl-3-(4-[2-hydroxyethoxy] phenyl)benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxyphenyl)-5,7-di-tert-butyl-benzofuran-2-on, 3-(3,4-Dimethylphenyl)-5,7-di-tert-butyl-benzofuran-2-on, Irganoxs HP-136 der Firma Ciba Specialty Chemicals, und 3-(2,3-Dimethylphenyl)-5,7-di-tert-butyl-benzofuran-2-on.

Zur Gruppe q) der Thiosynergisten gehören zum Beispiel Dilaurylthiodipropionat oder Distearylthiodipropionat.

Zur Gruppe r) der peroxidzerstörende Verbindungen gehören zum Beispiel Ester der $\beta$-Thiodipropionsäure, zum Beispiel der Lauryl-, Stearyl-, Myristyl- oder Tridecylester, Mercaptobenzimidazol oder das Zinksalz des 2-Mercaptobenzimidazols, Zinkdibutyldithiocarbamat, Dioctadecyldisulfid, Pentaerythrit-tetrakis($\beta$-dodecylmercapto)-propionat.

Zur Gruppe s) der basischen Costabilisatoren gehören zum Beispiel Melamin, Polyvinylpyrrolidon, Dicyandiamid, Triallylcyanurat, Harnstoffderivate, Hydrazinderivative, Amine, Polyamide, Polyurethane, Alkali- und Erdalkalisalze höherer Fettsäuren, zum Beispiel Calciumstearat, Zinkstearat, Magnesiumbehenat, Magnesiumstearat, Natriumricinoleat und Kaliumpalmitat, Antimonbrenzcatechinat oder Zinkbrenzcatechinat.

Weiterhin kann die erfindungsgemäße Mischung als Komponente (c) oder der Kunststoff sonstige Additive und Zusatzstoffe t) enthalten. Als geeignete Additive der Gruppe t) kommen die üblichen Zusatzstoffe, wie z. B. Pigmente, Farbstoffe, Nukleierungsmittel, Füll- oder Verstärkungsmittel, Beschlagverhinderungsmittel, Biozide und Antistatika, in Betracht.

Geeignete Pigmente sind anorganische Pigmente, beispielsweise Titandioxid in seinen drei Modifikationen Rutil, Anatas oder Brookit, Ultramarinblau, Eisenoxide, Bismutvanadate oder Ruß sowie die Klasse der organischen Pigmente, beispielsweise Verbindungen aus der Klasse der Phthalocyanine, Perylene, Azoverbindungen, Isoindoline, Chinophthalone, Diketopyrolopyrole, Chinacridone, Dioxazine, Indanthrone.

Unter Farbstoffen sind alle Farbmittel zu verstehen, die sich im verwendeten Kunststoff vollständig lösen bzw. in einer molekulardispersen Verteilung vorliegen und somit zur hochtransparenten, nichtstreuenden Einfärbung von Polymeren verwendet werden können. Ebenfalls als Farbstoffe sind organische Verbindungen anzusehen, die eine Fluoreszenz im sichtbaren Teil des elektromagnetischen Spektrums aufweisen wie Fluoreszenzfarbstoffe.

Geeignete Nukleierungsmittel umfassen zum Beispiel anorganische Stoffe, beispielsweise Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z. B. 4-tert-Butylbenzoesäure, Adipinsäure, Diphenylessigsäure, Natriumsuccinat oder Natriumbenzoat; polymere Verbindungen, wie beispielsweise ionische Copolymerisate ("Ionomere").

Geeignete Füll- oder Verstärkungsstoffe umfassen zum Beispiel Calciumcarbonat, Silikate, Talk, Mica, Kaolin, Glimmer, Bariumsulfat, Metalloxide und -hydroxide, Ruß, Graphit, Holzmehl und Mehle oder Fasern anderer Naturprodukte, synthetische Fasern. Als Beispiele für faserförmige bzw. pulverförmige Füllstoffe kommen außerdem Kohlenstoff- oder Glasfasern in Form von Glasgeweben, Glasmatten oder Glasseidenrovings, Schnittglas, Glaskugeln sowie Wollstonit in Betracht. Die Einarbeitung von Glasfasern kann sowohl in Form von Kurzglasfasern als auch in Form von Endlosfasern (Rovings) erfolgen.

Geeignete Antistatika sind beispielsweise Aminderivate wie N,N-Bis(hydroxyalkyl)alkylamine oder -alkylenamine, Polyethylenglycolester und -ether, ethoxylierte Carbonsäureester- und -amide und Glycerinmono- und - distearate, sowie deren Mischungen.

Bevorzugt sind zusätzlich als optionale Komponente (c) Antioxidantien, Flammschutzmittel und/oder Farbmittel in den erfindungsgemäßen Mischungen enthalten.

Das Gewichtsverhältnis der Komponenten (a) und (b) in den erfindungsgemäßen Mischungen beträgt im Allgemeinen von 5:1 bis 1:5, bevorzugt von 2:1 bis 1:2, besonders bevorzugt von 1,2:1 bis 1:1,2, insbesondere bevorzugt ist eine Mischung im Gewichtsverhältnis von etwa 1:1.

Das Gewichtsverhältnis der Summe der Komponenten (a) und (b) zu Komponente (c) in den erfindungsgemäßen Mischungen beträgt, falls Komponente (c) vorhanden ist, im Allgemeinen von 100:1 bis 2:1, bevorzugt von 50:1 bis 5: 1, besonders bevorzugt von 30:1 bis 7:1 insbesondere bevorzugt ist eine Mischung im Gewichtsverhältnis von etwa 10:1.

Die Herstellung der erfindungsgemäßen Mischungen kann nach bekannten, dem Fachmann geläufigen Verfahren erfolgen.

Beispielsweise lässt sich, falls Komponente (b) ein Feststoff ist, Komponente (b) zur flüssigen Komponente (a) unter Mischen hinzugeben.

Falls Komponente (b) selbst flüssig ist, so können für die Mischung mit der flüssigen Komponente (a) die dem Fachmann bekannten Verfahren zur Mischung von Flüssigkeiten eingesetzt werden.

In einer bevorzugten Ausführungsform ist die erfindungsgemäße Mischung flüssig.

Im Allgemeinen lassen sich die Komponenten (a), (b) und optional (c) in beliebiger Reihenfolge mischen.

Beispielsweise kann man die Komponente (c) der Mischung der Komponenten (a) und (b) zusetzen, und dann homogenisieren.

Man kann aber auch zunächst die Komponenten (c) zu (a) und/oder (b) mischen und danach die Endmischung erzeugen.

Gegenstand der Erfindung ist daher auch ein entsprechendes Verfahren zur Herstellung der erfindungsgemäßen Mischungen.

Die erfindungsgemäßen Mischungen können auch erst in den zu stabilisierenden unbelebten organischen Materialien durch Zugabe der Komponenten (a), (b) und optional (c) erzeugt werden.

Es kann vorteilhaft sein die Mischung der Komponenten bei erhöhter Temperatur durchzuführen. Insbesondere kann die Komponente (a) und optional die Komponente (c) unmittelbar nach der Synthese der Komponente (b) zugegeben werden.

Besonders bevorzugt sind die folgenden Kombinationen von Verbindungen der Komponenten (a) und der verzweigten Polymere, enthaltend stabilisierend wirkende Gruppen (b) der Formeln IIa und IIb:

1. (2-Ethylhexyl)-2-cyano-3,3-diphenylacrylat und Verbindungen der Formeln IIa oder IIb basierend auf 4-Amino-2,2,6,6- tetramethylpiperidin,
2. (2-Ethylhexyl)-2-cyano-3,3-diphenylacrylat und Verbindungen der Formeln IIa oder IIb basierend auf 4-Amino-1,2,2,6,6- pentamethylpiperidin,
3. (2-Ethylhexyl)-2-cyano-3,3-diphenylacrylat und Verbindungen der Formeln IIa oder IIb basierend auf 4-Hydroxy-2,2,6,6- tetramethylpiperidin,

4. (2-Ethylhexyl)-2-cyano-3,3-diphenylacrylat und Verbindungen der Formeln IIa oder IIb basierend auf 4-Hydroxy-1,2,2,6,6- pentamethylpiperidin,
5. (2-Ethylhexyl)-2-cyano-3,3-diphenylacrylat und Verbindungen der Formeln IIa oder IIb basierend auf 4-Amino-2,2,6,6- tetramethylpiperidin-N-oxyl,
6. (2-Ethylhexyl)-2-cyano-3,3-diphenylacrylat und Verbindungen der Formeln IIa oder IIb basierend auf 4-Hydroxy-2,2,6,6- tetramethylpiperidin-N-oxyl,
7. 2-Ethylhexyl-4-methoxycinnamat und Verbindungen der Formeln IIa oder IIb basierend auf 4-Amino-2,2,6,6-tetramethylpiperidin,
8. 2-Ethylhexyl-4-methoxycinnamat und Verbindungen der Formeln IIa oder IIb basierend auf 4-Amino-1,2,2,6,6-pentamethylpiperidin,
9. 2-Ethylhexyl-4-methoxycinnamat und Verbindungen der Formeln IIa oder IIb basierend auf 4-Hydroxy-2,2,6,6-tetramethylpiperidin,
10. 2-Ethylhexyl-4-methoxycinnamat und Verbindungen der Formeln IIa oder IIb basierend auf 4-Hydroxy-1,2,2,6,6-pentamethylpiperidin,
11. 2-Ethylhexyl-4-methoxycinnamat und Verbindungen der Formeln IIa oder IIb basierend auf 4-Amino-2,2,6,6-tetramethylpiperidin-N-oxyl,
12. 2-Ethylhexyl-4-methoxycinnamat und Verbindungen der Formeln IIa oder IIb basierend auf 4-Hydroxy-2,2,6,6-tetramethylpiperidin-N-oxyl,

Die erfindungsgemäßen Mischungen eignen sich in hervorragender Weise zur Verwendung als Stabilisatoren zum Stabilisieren von unbelebtem organischem Material gegen die Einwirkung von Licht, Sauerstoff und Wärme. Die erfindungsgemäßen Mischungen werden den zu stabilisierenden unbelebten organischen Materialien in der Regel in einer Konzentration zugesetzt, die ausreicht um die gewünschte Stabilisationswirkung zu erreichen (=effektive Menge). Bevorzugt werden die erfindungsgemä-βen Mischungen in einer Konzentration von 0,01 bis 5 Gew.-%, vorzugsweise von 0,02 bis 1 Gew.-%, bezogen auf das unbelebte organische Material, vor, während oder nach der Herstellung des unbelebten organischen Materials zugesetzt.

Gegenstand der Erfindung ist außerdem ein Verfahren zur Stabilisierung von unbelebten organischen Materialien, insbesondere Kunststoffe und Lacke, gegen die Einwirkung von Licht, Sauerstoff und Wärme umfassend die Zugabe der erfindungsgemäßen Mischungen zu den unbelebten organischen Materialien, vorzugsweise in den oben angegebenen Konzentrationen.

Die erfindungsgemäße Mischung kann dem zu schützenden unbelebten organischen Material als vorgefertigte Mischung der Komponenten (a), (b) und optional (c) zugesetzt werden, ebenso ist jedoch die getrennte Zugabe der Komponenten (a), (b) und optional (c) zu dem zu schützenden Material möglich, die Mischung entsteht dann erst in dem zu schützenden Material. Bei einer getrennten Zugabe der Komponenten (a), (b) und optional (c) kann diese gleichzeitig oder zeitlich versetzt erfolgen, wobei die Reihenfolge im Allgemeinen unerheblich ist.

Unter unbelebtem organischem Material sind beispielsweise kosmetische Präparate wie Salben und Lotionen, Arzneimittelformulierungen wie Pillen und Zäpfchen, photografisches Aufzeichnungsmaterial wie photografische Emulsionen oder Vorprodukte für Kunststoffe und Lacke, insbesondere jedoch Kunststoff und Lacke selbst, zu verstehen. Aus unbelebtem organischen Material lassen sich Gegenstände herstellen.

Gegenstand der Erfindung ist außerdem gegen die Einwirkung von Licht, Sauerstoff und Wärme stabilisiertes unbelebtes organisches Material, insbesondere Kunststoffe und Lacke, welches die erfindungsgemäßen Mischungen, vorzugsweise in den oben angegebenen Konzentrationen enthält.

Zur Vermischung der erfindungsgemäßen Mischung vor allem mit Kunststoffen können alle bekannten Vorrichtungen und Methoden zum Einmischen von Stabilisierungsmitteln oder anderen Zusätzen in Polymere angewandt werden.

Als Kunststoffe, die durch die erfindungsgemäßen Mischungen stabilisiert werden können, seien beispielsweise genannt:

Thermoplastische Elastomere;

Polymere von Mono- und Diolefinen, wie zum Beispiel Polyethylen niedriger und hoher Dichte, Polypropylen, lineares Polybuten-1, Polyisopren, Polybutadien sowie Copolymerisate von Mono- oder Diolefinen oder Mischungen der genannten Polymeren;

Copolymerisate von Mono- oder Diolefinen mit anderen Vinylmonomeren, wie zum Beispiel Ethylen-Alkylacrylat-Copolymere, Ethylen-Alkylmethacrylat-Copolymere, Ethylen-Vinylacetat-Copolymere oder Ethylen-Acrylsäure-Copolymere;

Polystyrol sowie Copolymere von Styrol oder α-Methylstyrol mit Dienen und/oder Acrylderivaten, wie zum Beispiel Styrol-Butadien, Styrol-Acrylnitril (SAN), Styrol-Ethylmethacrylat, Styrol-Butadien-Ethylacrylat, Styrol-Acrylnitril-Methacrylat, AcrylnitrilButadien-Styrol (ABS) oder Methylmethacrylat-Butadien-Styrol (MBS);

Halogenhaltige Polymere, wie zum Beispiel Polyvinylchlorid, Polyvinylfluorid, Polyvinylidenfluorid sowie deren Copolymere;

Polymere, die sich von $\alpha,\beta$-ungesättigten Säuren und deren Derivaten ableiten, wie Polyacrylate, Polymethacrylate, Polyacrylamide und Polyacrylnitrile;

Polymere, die sich von ungesättigten Alkoholen und Aminen bzw. von deren Acrylderivaten oder Acetalen ableiten, zum Beispiel Polyvinylalkohol und Polyvinylacetat;

Polyurethane, Polyamide, Polyharnstoffe, Polyester, Polycarbonate, Polysulfone, Polyethersulfone und Polyetherketone.

Weiterhin können mit den erfindungsgemäßen Mischungen Lacküberzüge stabilisiert werden, zum Beispiel Industrielackierungen. Unter diesen sind Einbrennlackierungen, unter diesen wiederum Fahrzeuglackierungen, vorzugsweise Zweischichtlackierungen, besonders hervorzuheben. Ein anderes Verwendungsgebiet sind zum Beispiel Anstrichmittel für Außenanstriche von Gebäuden, anderen Bauwerken oder technischen Apparaturen.

Die erfindungsgemäßen Mischungen können in fester oder gelöster Form dem Lack zugesetzt werden. Ihre gute Löslichkeit in Lacksystemen ist dabei von besonderem Vorteil.

Bevorzugt werden die erfindungsgemäßen Mischungen zum Stabilisieren von thermoplastischen Elastomeren eingesetzt, zum Beispiel auf Polyolefinbasis. Insbesondere finden die erfindungsgemäßen Mischungen Einsatz in der Stabilisierung von Formmassen aus den genannten Materialien.

Ein weiteres bevorzugtes Einsatzgebiet ist die Stabilisierung von Polyethylen niedriger und hoher Dichte, sowie von Polypropylen und Polyamid, beispielsweise auch von Fasern hieraus.

Ebenfalls bevorzugt werden die erfindungsgemäßen Mischungen zur Stabilisierung von Kunststoffen, bestehend aus mindestens einem Polymer, ausgewählt aus thermoplastischen Elastomeren, Polyolefinen, Polstyrol, Copolymeren von Styrol oder $\alpha$-Methylstyrols, Polyestern, Polyethern, Polycarbonaten, Polyvinylchlorid, Polyacrylaten, Polymethacrylaten, Polyurethanen sowie physikalischen Blends der zuvor genannten Polymere verwendet.

Das erfindungsgemäßen Mischungen zeigen eine verbesserte Stabilisierung unbelebter organischer Materie gegenüber Licht mit einem hohen UV-Anteil und/oder hoher Lichtintensität. Weiterhin beruhen die erfindungsgemäßen Mischungen auf einfach zugänglichen Ausgangsstoffen. Mit Hilfe der erfindungsgemäßen Mischungen ist es möglich einen effizienten Schutz unbelebter organischer Materie gegenüber Sauerstoff oder Wärme zu gewährleisten.

Die vorstehenden Ausführungsformen des erfindungsgemäßen Verfahrens und die nachfolgenden Beispiele verdeutlichen beispielhaft die vorliegende Erfindung. Es sind jedoch viele weitere Variationen des Verfahrens und Kombinationen der Merkmale des erfindungsgemäßen Verfahrens für den Fachmann denkbar, ohne den Rahmen der Patentansprüche zu verlassen.

Beispiele

Beispiel 1: Herstellung erfindungsgemäßer Mischungen

972 g Trimethylolpropan, statistisch verethert mit 1 Mol Ethylenoxid pro Mol Hydroxylgruppen, 411 g 1,2,2,6,6-Pentamethylpiperidin-4-ol und 709 g Diethylcarbonat wurden in einem Reaktionsgefäß, ausgestattet mit Rührer, Rückflusskühler und Innenthermometer, vorgelegt, dann 0,2 g Kaliumcarbonat zugesetzt, die Mischung unter Rühren auf 140°C erwärmt und 3,5 h bei 140°C gerührt. Im Anschluß wurde der Rückflusskühler gegen einen absteigenden Kühler getauscht, Ethanol abdestilliert und die Temperatur des Reaktionsgemisches langsam bis auf 200°C erhöht. Das Destillat (490 g) wurde in einem gekühlten Rundkolben gesammelt. Anschließend wurde die Reaktionsmischung auf 140°C abgekühlt, 0,1 g 85%ige Phosphorsäure zur Desaktivierung zugesetzt und dann 10 min bei 100 mbar von flüchtigen Bestandteilen befreit. Anschließend wurde das Produkt auf Raumtemperatur abgekühlt und durch Gelpermeationschromatographie analysiert; Laufmittel war Dimethylacetamid, als Kalibrationsstandard wurde Polymethylmethacrylat (PMMA) verwendet. Das zahlenmittlere Molekulargewicht Mn betrug 810 g/mol und das gewichtsmittlere Molekulargewicht Mw betrug 1590 g/mol. Die Viskosität, bestimmt bei 23°C nach DIN 53019, betrug 1100 mPas.

500g des erfindungsgemäßen Stabilisatorgruppen enthaltenden Polycarbonats wurden anschließend auf 80°C erwärmt, 500g (2-Ethylhexyl)-2-cyano-3,3-diphenylacrylat (CAS-Nr. 6197-30-4) zugegeben und 2 h bis zur Homogenität gerührt. Die Stabilisatormischung wies eine Viskosität, bestimmt bei 23°C nach DIN 53019, von 5800 mPas auf.

Beispiel 2: Herstellung erfindungsgemäßer Mischungen

In einem Reaktionsgefäß mit Rührer, Gaseinleitrohr und Tropftrichter mit Druckausgleich wurden unter Begasung mit trockenem Stickstoff 588 g BASONAT® HA 300, gelöst in der gleichen Gewichtsmenge an trockenem 2-Butanon, vorgelegt, 300ppm (bezogen auf Isocyanat) Dibutylzinn-dilaurat bei Raumtemperatur zugegeben und die Mischung auf 50°C erwärmt. Dann wurden 453,6 g 1,2,2,6,6-Pentamethylpiperidin-4-ol, gelöst in der gleichen Gewichtsmenge an trockenem 2-Butanon, innerhalb 30 min zugetropft. Nach Beendigung der Zugabe wurde die Reaktionsmischung noch 1 h bei 50°C nachgerührt. Anschliessend wurde das Lösungsmittel am Rotationsverdampfer im Vakuum entfernt. Die mittleren Molmassen des polymeren Stabilisators wurden mittels Gelpermeations-Chromatographie (GPC) bestimmt. Eluiert wurde mit Tetrahydrofuran als mobiler Phase, die Kalibrierung der Säulen erfolgte mit Polymethylmethacrylat als Standard. Mn = 1060 g/mol, Mw = 1190 g/mol.

500g des erfindungsgemäßen Stabilisatorgruppen enthaltenden Polyurethans wurden anschließend in einem Rundkolben auf 80°C erwärmt, 500g (2-Ethylhexyl)-2-cyano-3,3-diphenylacrylat (CAS-Nr. 6197-30-4) zugegeben und 2 h bis zur Homogenität gerührt. Die Stabilisatormischung wies eine Viskosität, bestimmt bei 40°C analog zu DIN 53019, von 8100 mPas auf.

BASONAT® HA 300 (BASF AG): Allophanatgruppen-enthaltendes Polyisocyanat auf Basis Hexamethylendiisocyanat, die Viskosität bei 23°C (DIN 53019) beträgt 200 - 400 mPas.

**Patentansprüche**

**1.** Mischung, enthaltend

(a) einen oder mehrere bei einer Temperatur von 5 bis 40°C und einem Druck von 500 bis 1500 mbAR (50 bis 150 kPa) flüssige UV-Absorber, unter der Maßgabe, dass die Mischung aus 95 % Benzolpropansäure-3-(2H-benzotriazol-2-yl)-5-(1,1-dimethylethyl)-4-hydroxy-C7-9-verzweigte und lineare -alkylester und 5 % 1-Methoxy-2-propyl Essigsäureester als flüssiger UV-Absorber ausgeschlossen ist,
(b) ein oder mehrere verzweigte Polymere, enthaltend stabilisierend wirkende Gruppen,
(c) optional einen oder mehrere weitere Zusatzstoffe,

wobei die Mischung bei Raumtemperatur flüssig ist.

**2.** Mischung nach Anspruch 1, **dadurch gekennzeichnet, dass** die verzweigten Polymere, enthaltend stabilisierend wirkende Gruppen (b) bei Raumtemperatur flüssig sind.

**3.** Mischung nach den Ansprüchen 1 bis 2, wobei der UV-Absorber (a) gewählt wird aus der Klasse der Cyanacrylate, Zimtsäureester, Benzotriazole, Triazine.

**4.** Mischung nach Anspruch 3, wobei der UV-Absorber (a) (2-Ethylhexyl)-2-Cyano-3,3-diphenylacrylat oder 2-Ethyl hexyl-4-methoxycinnamat ist.

**5.** Mischung nach Anspruch 1 bis 4, wobei das verzweigte Polymer enthaltend stabilisierend wirkende Gruppen eine hyperverzweigte Struktur aufweist.

**6.** Mischung nach den Ansprüchen 1 bis 5, wobei das verzweigte Polymer Carbonatgruppen enthält.

**7.** Mischung nach den Ansprüchen 1 bis 5, wobei das verzweigte Polymer Urethan-, Allophanat-, Harnstoff und/oder Biuretgruppen enthält.

**8.** Mischung nach den Ansprüchen 1 bis 7, wobei das verzweigte Polymer HALS-Gruppen als stabilisierend wirkende Gruppen enthält.

**9.** Mischung nach den Ansprüchen 1 bis 8, wobei zusätzlich als optionale Komponente (c) Antioxidantien, Flammschutzmittel und/oder Farbmittel enthalten sind.

**10.** Verwendung der Mischung gemäß den Ansprüchen 1 bis 9 zur Stabilisierung von Kunststoffen gegen die Einwirkung von Licht, Sauerstoff und/oder Wärme.

**11.** Verwendung nach Anspruch 10 zur Stabilisierung von Kunststoffen, bestehend aus mindestens einem Polymer, ausgewählt aus thermoplastischen Elastomeren, Polyolefinen, Polstyrol, Copolymeren von Styrol oder $\alpha$-Methylstyrols, Polyestern, Polyethern, Polycarbonaten, Polyvinylchlorid, Polyacrylaten, Polymethacrylaten, Polyurethanen sowie physikalischen Blends der zuvor genannten Polymere.

**12.** Verwendung nach Anspruch 10 zur Stabilisierung von Lacken.

**13.** Kunststoffe, enthaltend wenigstens eine Mischung gemäß den Ansprüchen 1 bis 9.

**14.** Gegenstände, hergestellt aus Kunststoffen gemäß Anspruch 13.

**15.** Verfahren zur Stabilisierung von Kunststoffen, gegen die Einwirkung von Licht, Sauerstoff und/oder Wärme, **dadurch gekennzeichnet, dass** man den Kunststoffen mindestens eine Mischung gemäß den Ansprüchen 1 bis 9 in einer effektiven Menge zugibt.

## Claims

**1.** A mixture comprising

(a) one or more UV absorbers which are liquid at a temperature of 5 to 40°C and a pressure of 500 to 1500 mbar (50 to 150 kPa), with the proviso that the mixture of 95% benzenepropanoic acid 3-(2H-benzotriazol-2-yl)-5-(1,1-dimethylethyl)-4-hydroxy-C7-9-branched and linear alkyl esters and 5% 1-methoxy-2-propyl acetate as a liquid UV absorber is exclude,
(b) one or more branched polymers comprising stabilizing groups,
(c) optionally one or more further addictions,

the mixture being liquid at room temperature.

**2.** The mixture according to claim 1, wherein the branched polymers comprising stabilizing groups (b) are liquid at room temperature.

**3.** The mixture according to either of claims 1 and 2, the UV absorber (a) bering selected from the class of the cyanoacrylates, cinnamic esters, benzotriazoles, and triazines.

**4.** The mixture according to claim 3, the UV absorber (a) being 2-ethylhexyl 2-cyano-3,3-diphenylacrylate or 2-ethylhexyl 4-methoxycinnamate.

**5.** The mixture according to any of claims 1 to 4, a hyperbranched structure bering possessed by the branched polymere comprising stabilizing groups.

**6.** The mixture according to any of claims 1 to 5, the branched polymer comprising carbonate groups.

**7.** The mixture according to any of claims 1 to 5, the branched polymere comprising urethane, allophanate, urea and/or biuret groups.

**8.** The mixture according to any of claims 1 to 7, the branched Polymer comprising HALS groups as stabilizing groups.

**9.** The mixture according to any of claims 1 to 8, further comprising as optional component (c) antioxidants, flame retardants and/or colorants.

**10.** The use of the mixture according to any of claims 1 to 9 for stabilizing plastics against the effect of light, oxygen and/or heat.

**11.** The use according to claim 10 for stabilising plastics composed of at least one polymer selected from thermoplastic elastomers, polyolefins, polystyrene, copolymers of styrene or of $\alpha$-methylstyrene, polyesters, polyethers, polycarbonates, polyvinyl chloride, polyacrylates, polymethacrylates, polyurethanes, and physical blends of the aforementioned polymers.

**12.** The use according to claim 10 for stabilizing coating materials.

**13.** A plastic comprising at least one mixture according to many of claims 1 to 9.

**14.** An particle produced from plastics according to claim 13.

**15.** A method of stabilizing plastics against the effect of light, oxygen and/or heat, which comprises adding to said plastics at least one mixture according to any of claims 1 to 9, in an affective amount.

**Revendications**

**1.** Mélange contenant

(a) un ou plusieurs absorbeurs UV liquides à une température de 5 à 40 °C et à une pression de 500 à 1 500 mbar (50 à 150 kPa), à condition que le mélange constitué de 95 % d'esters de 3-(2H-benzotriazol-2-yl)-5-(1,1-diméthyléthyl)-4-hydroxy(alkyle en C7-9 ramifié et linéaire) de l'acide benzènepropanoïque et 5 % d'esters de l'acide 1-méthoxy-2-propylacétique en tant qu'absorbeur UV liquide soit exclu,
(b) un ou plusieurs polymère ramifiés contenant des groupes à action stabilisants,
(c) éventuellement un ou plusieurs additifs supplémentaires,

le mélange étant liquide à température ambiante.

**2.** Mélange selon la revendication 1, **caractérisé en ce que** les polymères ramifies contenant des groupes à action stabilisante (b) sont liquides à température ambiante.

**3.** Mélange selon les revendications 1 à 2, dans lequel l'absorbeur UV (a) est choisi dans la classe des cyanacrylates, des esters de l'acide cinnamique, des benzotriazoles, des triazines.

**4.** Mélange selon la revendication 3, dans lequel l'absorbeur UV (a) est l'acrylate de (2-éthylhexyl)-2-cyano-3,3-diphényle ou le 4-méthoxycinnamate de 2-éthylhexyle.

**5.** Mélange selon les revendications 1 à 4, dan lequel le polymère ramifié convenant des groupes à action stabilisante présente une structure hyperramifiée.

**6.** Mélange selon les revendications 1 à 5, dans lequel le polymère ramifié contient des groupes carbonate.

**7.** Mélange selon les revendications 1 à 5, dans lequel le polymère ramifié contient des groupes uréthane, allophanate, urée et/ou biuret.

**8.** Mélange selon les revendications 1 à 7, dans lequel le polymère ramifié contient des groupes HALS en tuant que groupes à action stabilisante.

**9.** Mélange selon les revendications 1 à 8, dans lequel des antioxydant, des agents ignifuges et/ou des colorants sont également contenus en tant que composant optionnel (c).

**10.** Utilisation da mélange selon les revendications 1 à 9 pour la stabilisation de plastiques contre l'effet de la lumière, de l'oxygène et/ou de la chaleur.

**11.** Utilisation selon la revendication 10 pour la stabilisation de plastiques constitués d'au moins un polymère chois parmi les élastomères thermoplastiques, les polyoléfines, les polystyrènes, les copolymères de styrène ou d'$\alpha$-méthylstyrène, les polyesters, les polyéthers, les polycarbonates, le polychlorure de vinyle, les polyacrylates, les polyméthacrylates, les polyuréthanes et les mélanges physiques des polymères susmentionnés.

**12.** Utilisation selon la revendication 10 pour la stabilisation de laques.

**13.** Plastiques contentant au moins un mélange selon les revendications 1 à 9.

**14.** Articles, fabriqués à partir de plastiques selon la revendication 13.

**15.** Procédé de stabilisation de plastiques contre l'effet de la lumière, de l'oxygène et/ou de la chaleur, **caractérisé en ce qu'**au moines un mélange selon les revendications 1 à 9 est ajouté aux plastiques en une quantité efficace.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03018682 A
- EP 1363883 B1
- EP 1060225 B1
- WO 02092668 A1
- WO 2004094505 A1
- WO 2005070987 A1
- EP 2007057427 W
- WO 2006048206 A1
- EP 1191041 A2
- DE 10138216
- DE 10147712
- EP 825211 A
- GB 994890 A
- EP 496208 A
- EP 524500 A
- EP 524501 A
- EP 1122273 A
- DE 2808801 A
- DE 3403277 A
- DE 1543178 A
- DE 2916201 A
- DE 3810908 A
- DE 1670666 A
- DE 19734048 A
- EP 916335 A
- US 5844029 A
- US 5880191 A
- US 4325863 A
- US 4338244 A
- US 5175312 A
- US 5216052 A
- US 5252643 A
- DE 4316611 A
- DE 4316622 A
- DE 4316876 A
- EP 0589839 A
- EP 0591102 A


### In der Beschreibung aufgeführte Nicht-Patentliteratur


- **H. FREY et al.** Degree of Branching. *Acta Polym.,* 1997, vol. 48, 30
- **P.J. FLORY.** *J. Am. Chem. Soc.,* 1952, vol. 74, 2718
- **H. FREY et al.** *Chem. Eur. J.,* 2000, vol. 6 (14), 2499
- Schrift Cosmetic Legislation. Cosmetic Products. European Commission, 1999, vol. 1, 64-66
- **BECKER ; BRAUN.** Kunststoff-Handbuch Nr. 7, Polyurethane. Carl-Hanser-Verlag, 1993
- **BECKER ; BRAUN.** Kunststoff-Handbuch Nr. 7, Polyurethane. Carl-Hanser-Verlag, 1993, 91
- **BECKER ; BRAUN.** Kunststoff-Handbuch Nr. 7, Polyurethane. Carl-Hanser-Verlag, 1993, 94
- **BECKER ; BRAUN.** Kunststoff-Handbuch Nr. 7, Polyurethane. Carl-Hanser-Verlag, 1993, 95